# EUROPEAN PATENT APPLICATION

(11) **EP 4 742 781 A1**
(43) Date of publication of application: **13.05.2026**
(21) Application number: 23944007.6
(22) Date of filing: 04.07.2023
(51) Int. Cl.: H04W 56/00

(54) **WIRELESS COMMUNICATION METHOD, APPARATUS, AND DEVICE, AND STORAGE MEDIUM**

(71) Applicant: GUANGDONG OPPO MOBILE TELECOMMUNICATIONS CORP., LTD., Dongguan, Guangdong 523860 (CN)
(72) Inventor: WU, Zuomin, Dongguan, Guangdong 523860 (CN)
(74) Representative: Novagraaf Technologies
(86) International application number: PCT/CN2023/105694
(87) International publication number: WO 2025/007273

(57) **Abstract**

A wireless communication method, apparatus, and device, and a storage medium, related to the technical field of communications. The method comprises: a terminal device receiving, on a first downlink resource, a first downlink channel or signal sent by a network device, the first downlink channel or signal being used for determining synchronization assistance information (710); and on the basis of the synchronization assistance information, the terminal device sending a first uplink channel or signal to the network device by means of a first uplink resource (720). The first downlink channel or signal used for determining the synchronization assistance information is sent to the terminal device by the network device, so that the terminal device can determine the synchronization assistance information on the basis of the first downlink channel or signal, implement, on the basis of the synchronization assistance information, uplink time domain and/or frequency domain synchronization, and then send the first uplink channel or signal to the network device after uplink synchronization is completed. In this way, the terminal device can request the network device to serve the terminal device when there is a connection establishment or service transmission requirement, thereby improving communication efficiency and reducing energy consumption.

## Description

### TECHNICAL FIELD

Embodiments of the present disclosure relate to the technical field of communications, and in particular, relate to a method and apparatus for wireless communication, and a device and a storage medium thereof.

### RELATED ART

**In** further systems for non-terrestrial networks (NTN), connection establishment or traffic transmission between a terminal device and a network device is requested by the terminal device for power saving or other purposes (for example, avoiding providing services in some countries or regions where it is not allowed). Alternatively, in a case where no terminal device requests the connection establishment or traffic transmission, the network device turns off part of communication devices to save power; and in a case where the terminal device requests the connection establishment or traffic transmission, the network device turns on the communication devices to achieve normal communication with the terminal device.

However, in such scenarios, how to achieve communication between the terminal device and the network device requires further research.

### SUMMARY

Embodiments of the present disclosure provide a method and apparatus for wireless communication, and a device and a storage medium thereof. The technical solutions are as follows.

According to some embodiments of the present disclosure, a method for wireless communication is provided. The method is performed by a terminal device, and includes:
receiving a first downlink channel or signal from a network device over a first downlink resource, wherein the first downlink channel or signal is configured to determine synchronization assistance information; and
transmitting a first uplink channel or signal to the network device over a first uplink resource based on the synchronization assistance information.

According to some embodiments of the present disclosure, a method for wireless communication is provided. The method is performed by a network device, and includes:
transmitting a first downlink channel or signal to a terminal device over a first downlink resource, wherein the first downlink channel or signal is configured to determine synchronization assistance information; and
detecting a first uplink channel or signal transmitted by the terminal device over a first uplink resource based on the synchronization assistance information.

According to some embodiments of the present disclosure, an apparatus for wireless communication is provided. The apparatus includes:
a receiving module, configured to receive a first downlink channel or signal from a network device over a first downlink resource, wherein the first downlink channel or signal is configured to determine synchronization assistance information; and
a transmitting module, configured to transmit a first uplink channel or signal to the network device over a first uplink resource based on the synchronization assistance information.

According to some embodiments of the present disclosure, an apparatus for wireless communication is provided. The apparatus includes:
a transmitting module, configured to transmit a first downlink channel or signal to a terminal device over a first downlink resource, wherein the first downlink channel or signal is configured to determine synchronization assistance information; and
a receiving module, configured to detect a first uplink channel or signal transmitted by the terminal device over a first uplink resource based on the synchronization assistance information.

According to some embodiments of the present disclosure, a communication device is provided. The communication device includes a processor and a memory. The memory is configured to store one or more computer programs. The processor is configured to load and run the one or more computer programs to cause the communication device to perform the method wireless communication performed by the terminal device or the method wireless communication performed by the network device described above.

According to some embodiments of the present disclosure, a computer-readable storage medium is provided. The storage medium stores one or more computer programs. The one or more computer programs, when loaded and run by a processor, cause the processor to perform the method wireless communication performed by the terminal device or the method wireless communication performed by the network device described above.

According to some embodiments of the present disclosure, a chip is provided. The chip includes programmable logic circuitry and/or one or more program instructions. The chip, when running, is caused to perform the method wireless communication performed by the terminal device or the method wireless communication performed by the network device described above.

According to some embodiments of the present disclosure, a computer program product is provided. The computer program product includes one or more computer instructions stored in a computer-readable storage medium. The one or more computer instructions, when read from the computer-readable storage medium and executed by a processor, cause the processor to perform the method wireless communication performed by the terminal device or the method wireless communication performed by the network device described above.

The technical solutions according to the embodiments of the present disclosure achieve the following beneficial effects:

The network device transmits the first downlink channel or signal for determining the synchronization assistance information to the terminal device, such that the terminal device determines the synchronization assistance information based on the first downlink channel or signal, achieves uplink time-domain and/or frequency-domain synchronization based on the synchronization assistance information, and transmits the first uplink channel or signal to the network device upon the uplink synchronization. As such, the terminal device requests the network device for services in response to a requirement of the connection establishment or traffic transmission, such that the communication efficiency is improved, and the energy consumption is reduced.

### BRIEF DESCRIPTION OF DRAWINGS

FIG. 1 is a schematic diagram of an architecture of a communication system according to some embodiments of the present disclosure;
FIG. 2 is a schematic diagram of an architecture of a communication system according to some embodiments of the present disclosure;
FIG. 3 is a schematic diagram of an architecture of a communication system according to some embodiments of the present disclosure;
FIG. 4 is a schematic diagram of an architecture of a communication system according to some embodiments of the present disclosure;
FIG. 5 is a schematic diagram of an architecture of a communication system according to some embodiments of the present disclosure;
FIG. 6 is a schematic diagram of an architecture of a communication system according to some embodiments of the present disclosure;
FIG. 7 is a flowchart of a method for wireless communication according to some embodiments of the present disclosure;
FIG. 8 is a schematic diagram of determining synchronization assistance information based on a first downlink channel or signal according to some embodiments of the present disclosure;
FIG. 9 is a schematic diagram of determining synchronization assistance information based on a first downlink channel or signal according to some embodiments of the present disclosure;
FIG. 10 is a schematic diagram of determining synchronization assistance information based on a first downlink channel or signal according to some embodiments of the present disclosure;
FIG. 11 is a schematic diagram of determining synchronization assistance information based on a first downlink channel or signal according to some embodiments of the present disclosure;
FIG. 12 is a schematic diagram of correspondence of a first uplink resource to a first downlink resource according to some embodiments of the present disclosure;
FIG. 13 is a schematic diagram of correspondence of two first uplink resources to a first downlink resource according to some embodiments of the present disclosure;
FIG. 14 is a flowchart of a method for wireless communication according to some embodiments of the present disclosure;
FIG. 15 is a block diagram of an apparatus for wireless communication according to some other embodiments of the present disclosure;
FIG. 16 is a block diagram of an apparatus for wireless communication according to some other embodiments of the present disclosure;
FIG. 17 is a schematic structural diagram of a terminal device according to some embodiments of the present disclosure; and
FIG. 18 is a schematic structural diagram of a network device according to some embodiments of the present disclosure.

### DETAILED DESCRIPTION

For clearer descriptions of the objectives, technical solutions, and advantages of the present disclosure clearer, embodiments of the present disclosure are further described in detail hereinafter with reference to the accompanying drawings.

A network architecture and a service scenario described in the embodiments of the present disclosure are intended to describe the technical solutions according to the embodiments of the present disclosure more clearly, and do not constitute limitations on the technical solutions according to the embodiments of the present disclosure. Those of ordinary skill in the art may understand that, with evolution of the network architecture and emergence of a new service scenario, the technical solutions according to the embodiments of the present disclosure are also applicable to a similar technical problem.

The technical solutions of the embodiments of the present disclosure are applicable to various communication systems, such as a global system for mobile communication (GSM) system, a code-division multiple access (CDMA) system, a wideband code-division multiple access (WCDMA) system, a general packet radio service (GPRS) system, a long-term evolution (LTE) system, an advanced LTE (LTE-A) system, a new radio (NR) system, an evolved system of the NR system, an LTE-based access to unlicensed spectrum (LTE-U) system, an NR-based access to unlicensed spectrum (NR-U) system, a non-terrestrial network (NTN) system, a universal mobile telecommunication system (UMTS), a wireless local area network (WLAN) system, a wireless fidelity (Wi-Fi) system, a 5^{th} generation (5G) system, a 6^{th} generation (6G) system, or another communication system.

Generally, a conventional communication system supports a limited quantity of connections and is easy to implement. However, with development of communication technologies, a mobile communication system supports not only conventional communications modes, but also other communications modes, such as device-to-device (D2D) communications, machine-to-machine (M2M) communications, machine-type communications (MTC), vehicle-to-vehicle (V2V) communications, or vehicle-to-everything (V2X) communications. The embodiments of the present disclosure are also applicable to these communication systems.

The communication system in the embodiments of the present disclosure may be applicable to a carrier aggregation (CA) scenario, a dual connectivity (DC) scenario, and a standalone (SA) networking scenario.

The communication system in the embodiments of the present disclosure may be applicable to an unlicensed spectrum. The unlicensed spectrum may also be considered as a shared spectrum. Alternatively, the communication system in the embodiments of the present disclosure may be applicable to a licensed spectrum. The licensed spectrum may also be considered as an unshared spectrum or a dedicated spectrum.

The embodiments of the present disclosure are also applicable to NTN systems and terrestrial networks (TN) systems. Generally, the NTN provides communication services to terrestrial users using a satellite communication mode. The NTN systems currently include an NR-NTN system and an IoT-NTN system, and may include other NTN systems in the future.

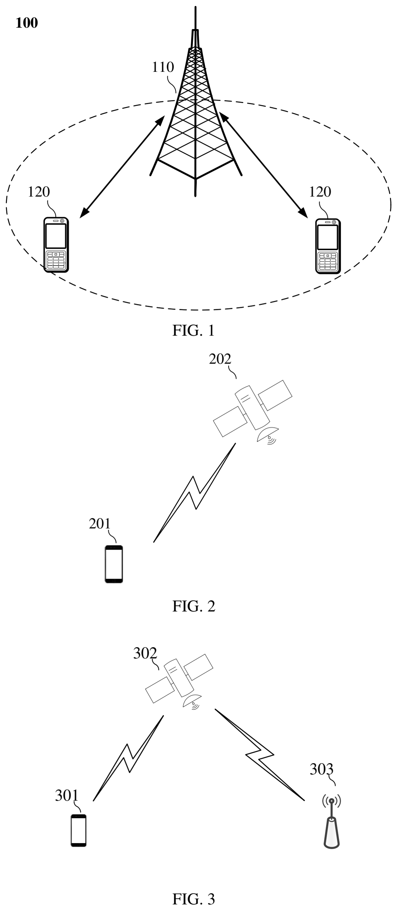

Illustratively, FIG. 1 is a schematic diagram of an architecture of a communication system according to some embodiments of the present disclosure. As illustrated in FIG. 1, the communication system 100 includes a network device 110, and the network device is a device in communication with the terminal device 120. The network device 110 provides the communication coverage for a specific geographical area and is in communication with the terminal devices within the coverage.

FIG. 1 illustratively shows one network device 110 and two terminal devices 120. In some embodiments of the present disclosure, the communication system 100 includes a plurality of network devices, and another number of terminal devices are disposed within the coverage of each of the network devices, which is not limited in the embodiments of the present disclosure.

Illustratively, FIG. 2 is a schematic diagram of an architecture of a communication system according to some embodiments of the present disclosure. Referring to FIG. 2, the communication system includes a terminal device 201 and a satellite 202. The terminal device 201 is in wireless communication with the satellite 202. A network formed between the terminal device 201 and the satellite 202 is referred to as an NTN. In the architecture of the communication system illustrated in FIG. 2, the satellite 202 has the function of a station, and the terminal device 201 is in direct communication with the satellite 202. In the system architecture, the satellite 202 is referred to as a network device. In some embodiments of the present disclosure, the communication system includes a plurality of satellites 202, and another number of terminal devices are disposed within the coverage of each of the satellites 202, which is not limited in the embodiments of the present disclosure.

Illustratively, FIG. 3 is a schematic diagram of an architecture of a communication system according to some embodiments of the present disclosure. Referring to FIG. 3, the communication system includes a terminal device 301, a satellite 302, and a station 303. The terminal device 301 is in wireless communication with the satellite 302, and the satellite 302 is in communication with the station 303. A network formed between the terminal device 301, the satellite 302, and the station 303 is referred to as an NTN. In the architecture of the communication system illustrated in FIG. 3, the satellite 302 may not have the function of the station, and the communication between the terminal device 301 and the station 303 needs to be relayed via the satellite 302. In the system architecture, the station 303 is referred to as the network device. In some embodiments of the present disclosure, the communication system includes a plurality of stations 303, each of the stations 303 is in communication with one or more satellites 302, and another number of terminal devices are disposed within the coverage of each of the satellites 302, which is not limited in the embodiments of the present disclosure.

Beyond 5G (B5G), 6G, and other future evolved communication systems may include a distributed multiple-input multiple-output (MIMO, also referred to as a distributed antenna system) scenario and/or a massive MIMO (also referred to as a massive antenna matrix system) scenario. In some cases, the distributed MIMO and/or massive MIMO also supports a cell-free or user equipment (UE)-centric networking scenario. It should be understood that the above scenarios are also applicable to the TN and/or the NTN.

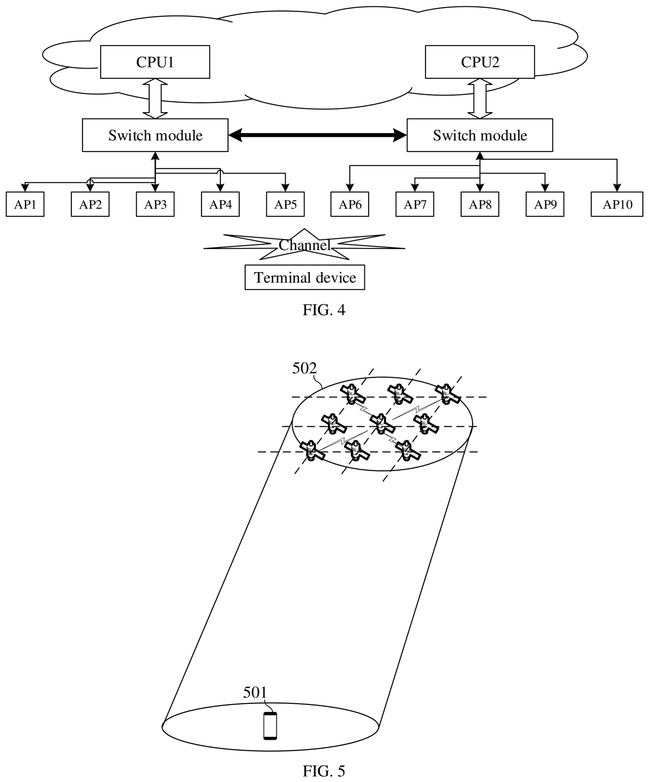

Illustratively, FIG. 4 is a schematic diagram of an architecture of a communication system according to some embodiments of the present disclosure. The system architecture includes a distributed antenna port (or a distributed antenna port cluster), and/or a central processing unit (CPU), and/or a switch module. As illustrated in FIG. 4, the communication system includes a plurality of distributed antenna ports (or distributed antenna port clusters), and different distributed antenna ports (or distributed antenna port clusters) are connected to the CPU via the switch module. The terminal device selects an appropriate distributed antenna port (or distributed antenna port cluster) for services based on the geographical location area. FIG. 4 illustratively shows two CPUs, two switch modules, 10 distributed antenna ports (represented as AP1 to AP10), and one terminal device. In some embodiments of the present disclosure, the communication system includes other numbers of CPUs, and/or other numbers of switch modules, and/or other numbers of distributed antenna ports (or distributed antenna port clusters), and/or other numbers of terminal devices, which is not limited in the embodiments of the present disclosure.

Illustratively, FIG. 5 is a schematic diagram of an architecture of a communication system according to some embodiments of the present disclosure. Referring to FIG. 5, the communication system includes a terminal device 501 and a satellite cluster 502. The terminal device 501 is in wireless communication with the satellite cluster 502. A network formed between the terminal device 501 and the satellite cluster 502 is referred to as an NTN. In the architecture of the communication system illustrated in FIG. 5, at least one satellite (such as the satellite located at the center position) in the satellite cluster 502 has the function of a station, and the terminal device 501 is in direct communication with the satellite cluster 502. In the system architecture, the satellite with the function of the station is referred to as a network device. In some embodiments of the present disclosure, the communication system includes a plurality of satellite clusters, and/or each of the satellite clusters includes one or more network devices, and/or another number of terminal devices are disposed within the coverage of each of the satellite clusters, which is not limited in the embodiments of the present disclosure.

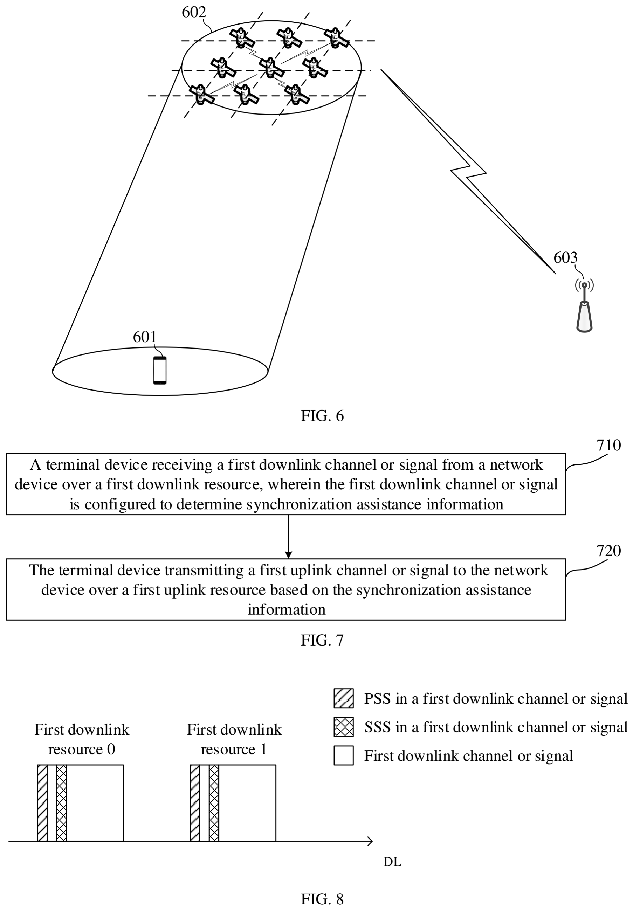

Illustratively, FIG. 6 is a schematic diagram of an architecture of a communication system according to some embodiments of the present disclosure. Referring to FIG. 6, the communication system includes a terminal device 601, a satellite cluster 602, and a station 603. The terminal device 601 is in wireless communication with the satellite cluster 602, and the satellite cluster 602 is in communication with the station 603. A network formed between the terminal device 601, the satellite cluster 602, and the station 603 is referred to as an NTN. In the architecture of the communication system illustrated in FIG. 6, the satellite cluster 602 may not have the function of the station, and the communication between the terminal device 601 and the station 603 needs to be relayed via the satellite cluster 602. In the system architecture, the station is referred to as the network device. In some embodiments of the present disclosure, the communication system includes a plurality of satellite clusters, and/or a network device is associated with one or more satellite clusters, and/or a plurality of network devices are disposed, and/or another number of terminal devices are disposed within the coverage of each of the network devices, which is not limited in the embodiments of the present disclosure.

The terminal device 10 according to the embodiments of the preset disclosure may be a UE, an access terminal, a subscriber unit, a subscriber station, a mobile station, a mobile platform, a remote station, a remote terminal, a mobile device, a wireless communication device, a user agent, or a user apparatus. In some embodiments, the terminal device 10 may also be a cellular phone, a cordless phone, a Session Initiation Protocol (SIP) phone, a wireless local loop (WLL) station, a personal digital assistant (PDA), a handheld device with a wireless communication function, a computing device or processing device connected to a wireless modem, a vehicle-mounted device, a wearable device, a terminal device in a 5G system (5GS), a terminal device in an evolved public land mobile network (PLMN), or the like, which is not limited in the embodiments of the present disclosure. For convenience of description, the devices mentioned above are collectively referred to as the terminal device. In the embodiments of the present disclosure, the "terminal device" and the "network device" is exchangeable, and those skilled in the art may understand that the "terminal device" and the "network device" have the same meaning.

The network device according to the embodiments of the present disclosure may be an access network device, which may be disposed on the ground or on the satellite. The access network device is a device deployed in an access network to provide a wireless communication function for the terminal device. The access network device may include various forms of macro stations, micro stations, relay stations, access points, and the like. In systems employing different radio access technologies, devices with a function of the access network device may have different names, for example, gNodeB or gNB in a 5G NR system. The term "access network device" may vary with the evolution of communication technologies. For convenience of description, in the embodiments of the present disclosure, the above apparatuses providing the wireless communication function for the terminal device are collectively referred to as the access network device. In some embodiments, a communication may be established between the terminal device and the core network device.

The "5G NR system" in the embodiments of the present disclosure may also be referred to as a 5G system or an NR system, and those skilled in the art may understand its meaning. The technical solutions according to the embodiments of the present disclosure may be applicable to the LTE system, the 5G NR system, an evolved system subsequent to the 5G NR system, a narrowband Internet of things (NB-IoT) system, and other communication systems, which is not limited in the present disclosure.

In the embodiments of the present disclosure, the network device provides services for a cell. The terminal device is in communication with the network device over a transmission resource (for example, a frequency-domain resource or a spectrum resource) on a carrier used by the cell. The cell may be a cell corresponding to the network device (for example, the station). The cell may belong to a macro station or a station corresponding to a small cell. The small cell herein may include a metro cell, a micro cell, a pico cell, a femto cell, and the like. These small cells have the characteristics of small coverage and low transmit power, and are applicable to providing high-rate data transmission services.

Prior to description of the technical solutions according to the present disclosure, an initial access procedure in the NTN system is first described. The following related arts, as optional solutions, may be arbitrarily combined with the technical solutions according to the embodiments of the present disclosure, and all fall within the protection scope of the embodiments of the present disclosure. The embodiments of the present disclosure include at least part of the following content.

In the NR system, the initial access procedure of the terminal device is implemented by detecting a synchronization signal/ physical broadcast channel (PBCH) block (SSB or SS/PBCH block for short) on a synchronization raster. The SSB is transmitted through a discovery burst transmission window or an SSB transmission occasion window. The discovery burst transmission window or the SSB transmission occasion window occurs periodically, and the period is configured by the network device through high-layer parameters. The discovery burst transmission window or the SSB transmission occasion window may include a set of candidate positions for SSB transmission. A set of SSB transmission occasions (also referred to as an SSB burst set) may include one or more SSBs, and each of the SSBs includes four symbols in the time domain. A set of SSB transmission occasions are transmitted within a half frame (5 ms).

One of the main functions of an SSB index is to enable the terminal device to acquire system timing information. In addition, the SSB index is further configured to indicate a quasi-co-location (QCL) relationship between SSBs. The QCL means that a large-scale parameter of a channel of a symbol on an antenna port can be inferred from a large-scale parameter of a channel of a symbol on another antenna port. The large-scale parameter may include delay spread, average delay, Doppler spread, Doppler frequency shift, spatial receiving parameters, and the like. For the SSB, SSBs carried in different beams form an SSB burst set in the 5G NR system, and different SSB indices correspond to different pieces of time-domain position information of SSBs within the burst set and correspond to specific SSB transmission beam information. SSBs with the same SSB index may have a QCL relationship, or SSBs with the same SSB index experience the same or similar large-scale parameter of the channel. For the terminal device, it is assumed that the network device transmits the SSBs using the same beam; and SSBs corresponding to different SSB indices do not have a QCL relationship because the SSBs may come from different transmission beams of the network device and experience different channel transmission characteristics.

In the initial access procedure of, the terminal device attempts to search for the SSB through predefined possible time-frequency positions of SSB, and acquires time and frequency synchronization, wireless frame timing, and cell identifier (ID) through the detected SSB. The network device configures type0-physical downlink control channel (PDCCH) common search space (CSS) set through master information block (MIB) information in the SSB. A PDCCH transmitted in the type0-PDCCH CSS set is configured to schedule a physical downlink shared channel (PDSCH) carrying system information block (SIB)1, and a CSS of the PDCCH is indicated by a pdcch-ConfigSIB1 information field in the MIB information. a cyclic redundancy check (CRC) of a downlink control information (DCI) format corresponding to the PDCCH is scrambled by a system information-radio network temporary identifier (SI-RNTI). The terminal device monitors PDCCH candidates in a corresponding type0-PDCCH CSS monitoring opportunity based on a control resource set (CORESET) 0 associated with the type0-PDCCH CSS to receive scheduling of a corresponding SIB1 message. Specifically, the pdcch-ConfigSIB 1 information field includes 8 bits, wherein least significant 4 bits indicate configuration of the type0-PDCCH CSS, and most significant 4 bits indicate configuration of CORESET 0.

Other system messages than the SIB1 message are scheduled by a type0A-PDCCH CSS set. In other words, a PDCCH transmitted in the type0A-PDCCH CSS set is configured to schedule a PDSCH carrying another system message than the SIB1 message. The CRC of the DCI format corresponding to the PDCCH is also scrambled by the SI-RNTI. In a case where the terminal device accesses an NR cell through NTN, the terminal device needs to read a system message SIB 19, and the system message SIB 19 includes synchronization assistance information of the NTN serving cell. The terminal device achieves the corresponding time-domain and/or frequency-domain synchronization based on the synchronization assistance information and a global navigation satellite system (GNSS) capability of the terminal device.

The synchronization assistance information is configured to indicate at least one of: serving satellite ephemeris information, a timing advance (TA) parameter, reference epoch time indication information (the epoch time is used to determine a t0 time), or a duration of a target timer.

Specifically, the synchronization assistance information includes at least one of:
a common TA parameter, wherein the common TA parameter includes at least one of:
   O a common timing value, for example, TACommon, with the unit of µs;
   O a common timing value drift, for example, TACommonDrift, with the unit of µs/s; or
   O a change rate of common timing value drift, for example, TACommonDriftVariation, with the unit of µs/s²;
a first format of serving satellite ephemeris information:
   O a satellite position state vector X parameter: for example, ServingSatelliteEphemerisStateVectorX, with the unit of m;
   O a satellite position state vector Y parameter: for example, ServingSatelliteEphemerisStateVectorY, with the unit of m;
   O a satellite position state vector Z parameter: for example, ServingSatelliteEphemerisStateVectorZ, with the unit of m;
   O a satellite velocity state vector X parameter: for example, ServingSatelliteEphemerisStateVectorVx, with the unit of m/s;
   O a satellite velocity state vector Y parameter: for example, ServingSatelliteEphemerisStateVectorVy, with the unit of m/s;
   O a satellite velocity state vector Z parameter: for example, ServingSatelliteEphemerisStateVectorVz, with the unit of m/s;
a second format of serving satellite ephemeris information:
   O a semi-major axis α: for example, ServingSatelliteEphemerisSemiMajorAxis, with the unit of m;
   O an eccentricity e: for example, ServingSatelliteEphemerisEccentricityE;
   O an argument of periapsis ω, for example, ServingSatelliteEphemerisArgumentOfPeriapsis, with the unit of rad (that is, a radian angle);
   O an ascending node longitude Ω, for example, ServingSatellite EphemerisLongitudeOfAscendingNode, with the unit of rad;
   O an inclination i: for example, ServingSatelliteEphemerisInclinationI, with the unit of rad;
   O a mean anomaly M at reference time t0, for example, ServingSatelliteEphemerisMeanAnomalyM, with the unit of rad;
a duration of a target timer, for example, ntnUlSyncValidityDuration, with the unit of s. In a case where the terminal device starts or restarts the target timer, the terminal device assumes that the acquired synchronization assistance information is valid prior to an end of the duration of the target timer ends (or prior to expiration of the target timer); or
reference epoch time indication information, for example, EpochTim. The reference epoch time indication information is configured to indicate a reference time t0 associated with the synchronization assistance information (for example, the serving satellite ephemeris information and the common TA parameter). Specifically, the reference epoch time indication information is configured to indicate a system frame number (SFN) and a subframe number associated with the reference time t0. By example but not limitation, the SFN indicated by the reference epoch time indication information ranges from 0 to 1023, and the subframe number indicated by the reference epoch time indication information ranges from 0 to 9.

In a case where the reference epoch time indication information is explicitly indicated by the SIB or dedicated signaling, the reference timing t0 of the synchronization assistance information is a start time of a target downlink subframe. The target downlink subframe is determined based on the SFN and the subframe number indicated by the reference epoch time indication information, and the reference epoch time indication information and the synchronization assistance information are transmitted concurrently. Alternatively, in a case where the synchronization assistance information is indicated by the SIB other than the SIB1, and does not explicitly indicate the reference epoch time indication information (that is, the synchronization assistance information does not include the reference epoch time indication information), the reference timing t0 of the synchronization assistance information is implicitly determined by an end position of a system information (SI) window of the system information carrying the synchronization assistance information.

The terminal device may further acquire resource configuration of a physical random access channel (PRACH) transmission occasion (RO) in the random access procedure based on the received system message of the cell. The random access is an important process in the initial access procedure. In addition to functions such as establishment of radio resource control (RRC), maintaining uplink synchronization, and cell switch, the random access procedure further has functions of beam management, system message request, and the like. The RO is a time-frequency resource carrying a random access preamble sequence. Prior to communication between the network device and the terminal device, the network device needs to know a beam where the terminal device is located and then sets an appropriate beam direction in the subsequent data transmission process. Since the PRACH in the random access procedure is a first piece of information transmitted by the terminal device to the network device, the function of reporting the beam where the terminal device is located is carried by the PRACH. Specifically, the beam where the terminal device may be determined based on a mapping between SSBs and ROs. The NR system supports the following relationships between SSBs and ROs , that is, 1) one-to-one mapping; 2) many-to-one mapping; 3) one-to-many mapping.

Prior to initiation of the random access, the terminal device measures and evaluates a signal quality of the cell and signal strengths of various SSBs in the cell. In a case where the detected signal strength of the SSB is greater than a threshold, the terminal device determines an SSB with the strongest or stronger signal. For example, after the terminal device determines SSB#1 as an SSB with the strongest signal, the terminal device determines a PRACH transmission occasion corresponding to SSB#1 as RO#1 based on the mapping between SSBs and ROs, and transmits the preamble on the RO#1. In a case where the network device successfully receives the preamble, the network device acquires the SSB selected by the terminal device based on resource information of successful reception of the preamble. For example, the network device determines that the preamble is associated with SSB#1 based on the correlation, and then determines beam information corresponding to the subsequent communication based on SSB#1.

FIG. 7 is a flowchart of a method for wireless communication according to some embodiments of the present disclosure. The method may be performed by a terminal device. The method may include at least one of the following processes (S710 to S720).

In S710, a terminal device receives a first downlink channel or signal from a network device over a first downlink resource, wherein the first downlink channel or signal is configured to determine synchronization assistance information.

In S720, the terminal device transmits a first uplink channel or signal to the network device over a first uplink resource based on the synchronization assistance information.

In some embodiments, upon receiving the first downlink channel or signal, the terminal device determines the synchronization assistance information based on the first downlink channel or signal.

In some embodiments, the synchronization assistance information is configured for the terminal device to achieve uplink synchronization. For example, the synchronization assistance information is configured for the terminal device to achieve uplink time-domain and/or frequency-domain synchronization.

Using the NTN network as an example, as the uplink signal needs to be received via relay of the satellite, or a receiver device of the uplink signal is located on the satellite, and the satellite moves along an orbit, the terminal device needs to achieve time and/or frequency synchronization of the uplink signal transmission based on a position of the moved satellite prior to transmission of the uplink signal to the network device. In the current NTN network, the terminal device achieves the synchronization based on the synchronization assistance information provided by the network device via the system message. In the future NTN system, in a case where the connection establishment or service transmission is requested by the terminal device, for reception of uplink request information from the terminal device, the network device needs to pre-provide the terminal device with the synchronization assistance information for assisting the terminal device in achieving the time and/or frequency synchronization of the uplink signal transmission.

On this basis, in the solutions according to the embodiments of the present disclosure, the network device transmits the first downlink channel or signal for determining the synchronization assistance information to the terminal device, such that the terminal device determines the synchronization assistance information based on the first downlink channel or signal, and achieves uplink time-domain and/or frequency-domain synchronization based on the synchronization assistance information.

In some embodiments, upon achieving uplink time-domain and/or frequency-domain synchronization based on the synchronization assistance information, the terminal device transmits the first uplink channel or signal to the network device over the first uplink resource. In some embodiments, the first downlink channel or signal includes a first downlink reference signal, wherein the first downlink reference signal is configured for the terminal device to achieve downlink synchronization, and/or to demodulate other channels or signals within the first downlink channel or signal than the first downlink reference signal.

In some embodiments, the first downlink reference signal includes one or more downlink synchronized signals. In some embodiments, in a case where the first downlink reference signal includes a plurality of downlink synchronized signals, the first downlink reference signal includes at least one primary synchronization signal (PSS) and at least one secondary synchronization signal (SSS).

In some embodiments, the first downlink channel or signal includes the first downlink reference signal, and the terminal device achieves downlink time-domain and/or frequency-domain synchronization based on the first downlink reference signal. In this way, prior to transmitting the uplink signal to the network device, the terminal device first achieves the downlink synchronization based on the downlink signal from the network device.

In some embodiments, the first uplink channel or signal is configured to request at least one of: transmission of a MIB, transmission of information carried in a PBCH, transmission of a SIB1, transmission of a system message, transmission of a SIB19, rescue, or transmission of a high-priority traffic.

In a case where the first uplink channel or signal is configured to request transmission of the system message, the system message refers to at least one of other SIBs than a SIB1.

Requesting transmission of SIB19 means that the synchronization assistance information received by the terminal device in S710 only includes most basic synchronization assistance information for uplink transmission, the terminal device may request synchronization assistance information including additional information upon the uplink synchronization based on the received synchronization assistance information.

In a case where the first uplink channel or signal is configured to request rescue, the first uplink channel or signal is transmitted by the terminal device located in a country or region where the network fails to provide normal communication traffic transmission. In some embodiments, the first uplink channel or signal is regarded as a common request signal. For example, for some countries or regions, the NTN network has not been authorized to provide normal communication traffics, and the terminal device located in the countries or regions also transmits the first uplink channel or signal over the first uplink resource in the NTN network in a case where natural disasters occur in the countries or regions, wherein the first uplink channel or signal is configured to request rescue. It should be understood that in a case where the first uplink channel or signal is a common request signal, a plurality of terminal devices transmit the first uplink channel or signal to the network device over the same first uplink resource.

In some embodiments, the first downlink channel or signal carries at least one of a MIB or information carried in a PBCH.

In some embodiments, in a case where the first downlink channel or signal carries a MIB or information carried in the PBCH, the first uplink channel or signal is not configured to request transmission of the MIB or the information carried in the PBCH.

In some embodiments, the MIB includes at least one of: an SFN, a common subcarrier spacing (subCarrierSpacingCommon), an SSB subcarrier drift (kSSB), a typeA demodulation reference signal (DMRS) position, type0-PDCCH CSS configuration, a cell barred (cellBarred), intra-frequency reselection (intraFreqReselection), or a spare bit.

In some embodiments, the information carried in a PBCH includes the MIB and additional PBCH information bits. The additional PBCH information bits include at least one of: a least significant bit of SFN, a half-frame indication bit, a most significant bit of kSSB, a most significant bit of an SSB index, or a reserved bit.

In some embodiments, a time-domain resource occupied by the first downlink channel or signal is predefined, and/or a frequency-domain resource occupied by the first downlink channel or signal is predefined.

In some embodiments, the first downlink resource is a periodically configured downlink resource, and the first downlink channel or signal is periodically transmitted. In some embodiments, the network device transmits the first downlink channel or signal over one or more first downlink resources within a period, and the terminal device receives the first downlink channel or signal over the one or more first downlink resources correspondingly. In some embodiments, in a case where a plurality of first downlink resources are contained in a period, each of the plurality of first downlink resources is associated with an index, or the first downlink channel or signal transmitted over each of the plurality of first downlink resources is associated with an index.

In some embodiments, first downlink channels or signals that are transmitted over each of the plurality of first downlink resources and are associated with a same index have a QCL relationship, and/or first downlink channels or signals that are transmitted over each of the plurality of first downlink resources and are associated with different indexes do not have a QCL relationship.

In some embodiments, first downlink channels or signals associated with a same index QCL relationship, and/or first downlink channels or signals associated with different indexes do not have a QCL relationship.

In the technical solutions according to the embodiments of the present disclosure, the network device transmits the first downlink channel or signal for determining the synchronization assistance information to the terminal device, such that the terminal device determines the synchronization assistance information based on the first downlink channel or signal, achieves uplink time-domain and/or frequency-domain synchronization based on the synchronization assistance information, and transmits the first uplink channel or signal to the network device upon the uplink synchronization. As such, the terminal device requests the network device for services in response to a requirement of the connection establishment or traffic transmission, such that the communication efficiency is improved, and the energy consumption is reduced.

The following describes several cases where the first downlink channel or signal is configured to determine the synchronization assistance information.

In some embodiments, the first downlink channel or signal being configured to determine the synchronization assistance information a case where the first downlink channel or signal carries the synchronization assistance information.

In some embodiments, in a case where the first downlink channel or signal carries a MIB, the first uplink channel or signal is not configured to request transmission of the MIB.

In some embodiments, in a case where the first downlink channel or signal carries the information carried in the PBCH, the first uplink channel or signal is not configured to request transmission of the information carried in the PBCH.

FIG. 8 is a schematic diagram of determining synchronization assistance information based on a first downlink channel or signal according to some embodiments of the present disclosure. As illustrated in FIG. 8, two first downlink resources are contained in a period, and associated indexes are 0 and 1. The first downlink channel or signal transmitted over the first downlink resource carries the synchronization assistance information. The first downlink channel or signal transmitted over a first downlink resource 0 and the first downlink channel or signal transmitted over a first downlink resource 1 do not have a QCL relationship. For example, the first downlink resource 0 is associated with a spatial filter 0 (or beam 0), and the first downlink resource 1 is associated with a spatial filter 1 (or beam 1). The first downlink channel or signal transmitted over each first downlink resource further includes a PSS and an SSS, and the PSS and the SSS are configured for the terminal device to achieve downlink synchronization and/or demodulate the first downlink channel or signal.

In a case where the first downlink channel or signal only carries the synchronization assistance information, the first uplink channel or signal transmitted by the terminal device to the network device over the first uplink resource is configured to request at least one of: transmission of a MIB, transmission of a SIB 1, transmission of a system message, transmission of a SIB19, or rescue.

In a case where the first downlink channel or signal carries the synchronization assistance information and the MIB, the first uplink channel or signal transmitted by the terminal device to the network device over the first uplink resource is configured to request at least one of: transmission of a SIB 1, transmission of a system message, transmission of a SIB 19, or rescue.

In the embodiments, the first downlink channel or signal directly carries the synchronization assistance information, and the terminal device may directly acquire the synchronization assistance information upon receiving the first downlink channel or signal, such that it is simpler for the terminal device to acquire the synchronization assistance information.

In some embodiments, the first downlink channel or signal being configured to determine the synchronization assistance information includes a case where the first downlink channel or signal carries a first downlink grant, and a second downlink channel or signal scheduled by the first downlink grant carries the synchronization assistance information.

In some embodiments, the first downlink channel or signal includes a first PDCCH, wherein the first PDCCH carries the first downlink grant. In some embodiments, the first PDCCH is scrambled with an SI-RNTI. Alternatively, the first PDCCH is scrambled with a common RNTI.

In some embodiments, the second downlink channel or signal includes a first PDCCH, wherein the first PDCCH carries the synchronization assistance information.

In some embodiments, the first downlink grant is configured to determine at least one of: allocation information of a time-domain resource occupied by the second downlink channel or signal, allocation information of a frequency-domain resource occupied by the second downlink channel or signal, a modulation and coding scheme (MCS) of a transport block (TB) in the second downlink channel or signal, a redundancy version (RV) of an RB in the second downlink channel or signal, whether the second downlink channel or signal includes an indication of a MIB, whether the second downlink channel or signal includes an indication of information carried in a PBCH, whether the second downlink channel or signal includes an indication of a SIB1, whether the second downlink channel or signal includes an indication of a SIB19, whether the second downlink channel or signal includes an indication of the synchronization assistance information, QCL information associated with the second downlink channel or signal, or an antenna polarization mode of a satellite.

In some embodiments, the second downlink channel or signal is configured to determine at least one of: whether the second downlink channel or signal includes an indication of a MIB, whether the second downlink channel or signal includes an indication of information carried in a PBCH, whether the second downlink channel or signal includes an indication of a SIB1, whether the second downlink channel or signal includes an indication of a SIB19, whether the second downlink channel or signal includes an indication of the synchronization assistance information, QCL information associated with the second downlink channel or signal, or an antenna polarization mode of a satellite.

In some embodiments, the antenna polarization mode of the satellite includes one of right hand circular polarization (RHCP), left hand circular polarization (LHCP), or linear polarization (LP).

In some embodiments, in a case where the first downlink channel or signal carries the MIB, or in a case where it is determined, based on the first downlink grant or the second downlink channel or signal, that the second downlink channel or signal includes the MIB, the first uplink channel or signal is not configured to request transmission of the MIB.

In some embodiments, in a case where the first downlink channel or signal carries the information carried in the PBCH, or in a case where it is determined, based on the first downlink grant or the second downlink channel or signal, that the second downlink channel or signal includes the information carried in the PBCH, the first uplink channel or signal is not configured to request transmission of the information carried in the PBCH.

In some embodiments, in a case where it is determined, based on the first downlink grant or the second downlink channel or signal, that the second downlink channel or signal includes a SIB1, the first uplink channel or signal is not configured to request transmission of the SIB1.

In some embodiments, in a case where it is determined, based on the first downlink grant or the second downlink channel or signal, that the second downlink channel or signal includes a SIB19, the first uplink channel or signal is not configured to request transmission of the SIB19.

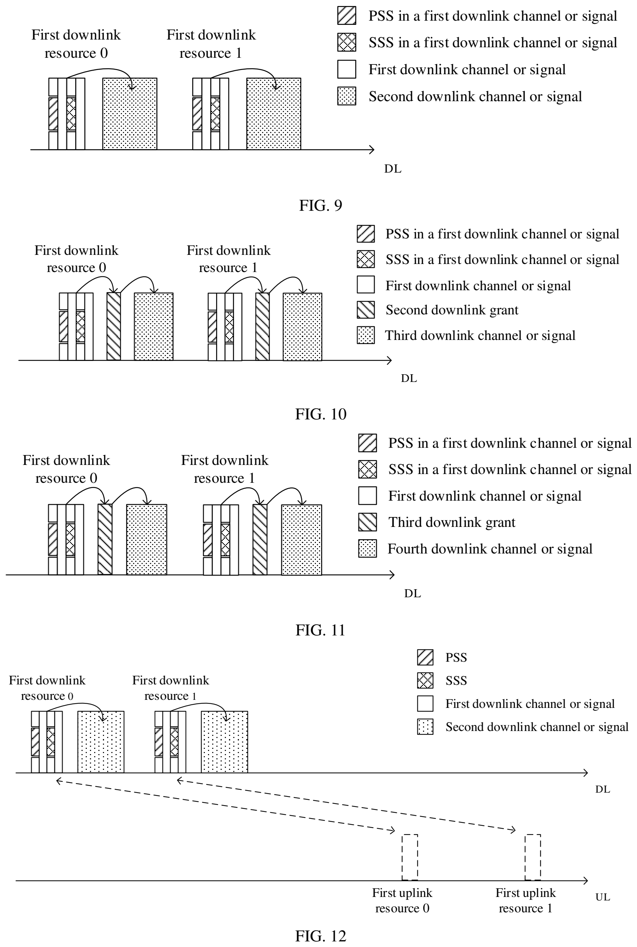

FIG. 9 is a schematic diagram of determining synchronization assistance information based on a first downlink channel or signal according to some embodiments of the present disclosure. As illustrated in FIG. 9, two first downlink resources are contained in a period, and associated indexes thereof are 0 and 1. The first downlink channel or signal transmitted over the first downlink resource carries the first downlink grant, and the second downlink channel or signal scheduled by the first downlink grant carries the synchronization assistance information. The first downlink channel or signal transmitted over a first downlink resource 0 and the first downlink channel or signal transmitted over a first downlink resource 1 do not have a QCL relationship. For example, the first downlink resource 0 is associated with a spatial filter 0 (or a beam 0), and the first downlink resource 1 is associated with a spatial filter 1 (or a beam 1). The first downlink channel or signal and the second downlink channel or signal scheduled by the first downlink grant within the first downlink channel or signal have a QCL relationship. The first downlink channel or signal transmitted over each first downlink resource further includes a PSS and an SSS, and the PSS and the SSS are configured for the terminal device to achieve downlink synchronization and/or demodulate the first downlink channel or signal.

In a case where the first downlink channel or signal or the second downlink channel or signal carries the MIB, the first uplink channel or signal is not configured to request transmission of the MIB; and/or
in a case where the first downlink channel or signal or the second downlink channel or signal carries information carried in the PBCH, the first uplink channel or signal is not configured to request transmission of the information carried in the PBCH; and/or
in a case where the first downlink channel or signal or the second downlink channel or signal carries a SIB1 message, the first uplink channel or signal is not configured to request transmission of the SIB1 message; and/or
in a case where the first downlink channel or signal or the second downlink channel or signal carries a SIB19 message, the first uplink channel or signal is not configured to request transmission of the SIB19 message.

In the embodiments, the first downlink channel or signal carries the first downlink grant, and the terminal device acquires, upon receiving the first downlink channel or signal, the synchronization assistance information carried in the second downlink channel or signal based on the second downlink channel or signal scheduled by the first downlink grant. Compared with a solution where the first downlink channel or signal directly carries the synchronization assistance information, in the way, the TB of the first downlink channel or signal is avoided to be large, and the complexity of receiving the first downlink channel or signal by the terminal device is reduced.

In some embodiments, the first downlink channel or signal being configured to determine the synchronization assistance information includes a case where the first downlink channel or signal carries configuration information of a first search space set, the first search space set is configured to transmit a second downlink grant, and a third downlink channel or signal scheduled by the second downlink grant carries the synchronization assistance information.

In some embodiments, the first search space set being configured to transmit the second downlink grant includes a case where the first search space set is configured to transmit a second PDCCH, wherein the second PDCCH carries the second downlink grant.

In some embodiments, the second PDCCH is scrambled with an SI-RNTI. Alternatively, the second PDCCH is scrambled with a common RNTI.

In some embodiments, the first search space set is a type 0-PDCCH CSS set, and the first downlink channel or signal includes a PBCH. The PBCH carries configuration information of the type 0-PDCCH CSS set.

In some embodiments, the third downlink channel or signal includes the second PDCCH, and the second PDCCH carries the synchronization assistance information.

In some embodiments, the second downlink grant is configured to determine at least one of: allocation information of a time-domain resource occupied by the third downlink channel or signal, allocation information of a frequency-domain resource occupied by the third downlink channel or signal, an MCS of a TB in the third downlink channel or signal, an RV of an RB in the third downlink channel or signal, whether the third downlink channel or signal includes an indication of a MIB, whether the third downlink channel or signal includes an indication of information carried in a PBCH, whether the third downlink channel or signal includes an indication of SIB1, whether the third downlink channel or signal includes an indication of aSIB19, whether the third downlink channel or signal includes an indication of the synchronization assistance information, QCL information associated with the third downlink channel or signal, or an antenna polarization mode of a satellite.

In some embodiments, the third downlink channel or signal is configured to determine at least one of: whether the third downlink channel or signal includes an indication of a MIB, whether the third downlink channel or signal includes an indication of information carried in a PBCH, whether the third downlink channel or signal includes an indication of SIB 1, whether the third downlink channel or signal includes an indication of aSIB 19, whether the third downlink channel or signal includes an indication of the synchronization assistance information, QCL information associated with the third downlink channel or signal, or an antenna polarization mode of a satellite.

In some embodiments, the antenna polarization mode of the satellite includes one of RHCP, LHCP, or LP.

In some embodiments, in a case where the first downlink channel or signal carries the MIB, or in a case where it is determined, based on the second downlink grant or the third downlink channel or signal, that the third downlink channel or signal includes the MIB, the first uplink channel or signal is not configured to request transmission of the MIB.

In some embodiments, in a case where the first downlink channel or signal carries the information carried in the PBCH, or in a case where it is determined, based on the second downlink grant or the third downlink channel or signal, that the third downlink channel or signal includes the information carried in the PBCH, the first uplink channel or signal is not configured to request transmission of the information carried in the PBCH.

In some embodiments, in a case where it is determined, based on the second downlink grant or the third downlink channel or signal, that the third downlink channel or signal includes a SIB1, the first uplink channel or signal is not configured to request transmission of the SIB1.

In some embodiments, in a case where it is determined, based on the second downlink grant or the third downlink channel or signal, that the third downlink channel or signal includes a SIB19, the first uplink channel or signal is not configured to request transmission of the SIB19.

FIG. 10 is a schematic diagram of determining synchronization assistance information based on a first downlink channel or signal according to some embodiments of the present disclosure. As illustrated in FIG. 10, the first downlink resource is an SSB resource, the first downlink channel or signal transmitted over the first downlink resource is an SSB, two SSB resources are contained in a period, and associated indexes thereof are 0 and 1. The SSB carries configuration information of the type 0-PDCCH CSS, and the third downlink channel or signal scheduled by the second downlink grant transmitted in the type 0-PDCCH CSS carries the synchronization assistance information. SSBO transmitted over an SSB resource 0 and an SSB1 transmitted over an SSB resource 1 do not have a QCL relationship. For example, an SSBO is associated with a spatial filter 0 (or a beam 0), and the SSB 1 is associated with a spatial filter 1 (or a beam 1). The SSBO, the type 0-PDCCH CSS associated with the SSBO, and the third downlink channel or signal scheduled by the second downlink grant transmitted in the type 0-PDCCH CSS have a QCL relationship.

In a case where the third downlink channel or signal carries a SIB1message, the first uplink channel or signal is not configured to request transmission of the SIB1 message; and/or in a case where the third downlink channel carries a SIB19 message, the first uplink channel or signal is not configured to request transmission of the SIB19 message.

In the embodiments, the first downlink channel or signal carries configuration information of the first search space set, and the terminal device receives, upon receiving the first downlink channel or signal, the second downlink grant in the first search space set, and then acquires the synchronization assistance information from the third downlink channel or signal scheduled by the second downlink grant.

In some embodiments, the first downlink channel or signal being configured to determine the synchronization assistance information includes a case where the first downlink channel or signal carries configuration information of a first control resource set, the first control resource set is configured to transmit a third downlink grant, and a fourth downlink channel or signal scheduled by the third downlink grant carries the synchronization assistance information.

In some embodiments, the first control resource set being configured to transmit the third downlink grant includes a case where the first control resource set is configured to transmit a third PDCCH, wherein the third PDCCH carries the third downlink grant.

In some embodiments, the second PDCCH is scrambled with an SI-RNTI. Alternatively, the second PDCCH is scrambled with a common RNTI.

In some embodiments, the first control resource set is a control resource set associated with a type 0-PDCCH CSS set, and the first downlink channel or signal includes a PBCH. The PBCH carries configuration information of the first control resource set.

In some embodiments, the fourth downlink channel or signal includes the third PDCCH, and the third PDCCH carries the synchronization assistance information.

In some embodiments, the third downlink grant is configured to determine at least one of: allocation information of a time-domain resource occupied by the fourth downlink channel or signal, allocation information of a frequency-domain resource occupied by the fourth downlink channel or signal, an MCS of a TB in the fourth downlink channel or signal, an RV of an RB in the fourth downlink channel or signal, whether the fourth downlink channel or signal includes an indication of a MIB, whether the fourth downlink channel or signal includes an indication of information carried in a PBCH, whether the fourth downlink channel or signal includes an indication of a SIB1, whether the fourth downlink channel or signal includes an indication of a SIB 19, whether the fourth downlink channel or signal includes an indication of the synchronization assistance information, QCL information associated with the fourth downlink channel or signal, or an antenna polarization mode of a satellite.

In some embodiments, the fourth downlink channel or signal is configured to determine at least one of: whether the fourth downlink channel or signal includes an indication of a MIB, whether the fourth downlink channel or signal includes an indication of information carried in a PBCH, whether the fourth downlink channel or signal includes an indication of a SIB 1, whether the fourth downlink channel or signal includes an indication of a SIB 19, whether the fourth downlink channel or signal includes an indication of the synchronization assistance information, QCL information associated with the fourth downlink channel or signal, or an antenna polarization mode of a satellite.

In some embodiments, the antenna polarization mode of the satellite includes one of RHCP, LHCP, or LP.

In some embodiments, in a case where the first downlink channel or signal carries a MIB, or in a case where it is determined, based on the third downlink grant or the fourth downlink channel or signal, that the fourth downlink channel or signal includes a MIB, the first uplink channel or signal is not configured to request transmission of the MIB.

In some embodiments, in a case where the first downlink channel or signal carries the information carried in the PBCH, or in a case where it is determined, based on the third downlink grant or the fourth downlink channel or signal, that the fourth downlink channel or signal includes the information carried in the PBCH, the first uplink channel or signal is not configured to request transmission of the information carried in the PBCH.

In some embodiments, in a case where it is determined, based on the third downlink grant or the fourth downlink channel or signal, that the fourth downlink channel or signal includes a SIB 1, the first uplink channel or signal is not configured to request transmission of the SIB1.

In some embodiments, in a case where it is determined, based on the third downlink grant or the fourth downlink channel or signal, that the fourth downlink channel or signal includes a SIB19, the first uplink channel or signal is not configured to request transmission of the SIB 19.

FIG. 11 is a schematic diagram of determining synchronization assistance information based on a first downlink channel or signal according to some embodiments of the present disclosure. As illustrated in FIG. 11, the first downlink resource is an SSB resource, the first downlink channel or signal transmitted over the first downlink resource is an SSB, two SSB resources are contained in a period, and associated indexes thereof are 0 and 1. The SSB carries configuration information of the control resource set (that is, the first control resource set) associated with the type 0-PDCCH CSS, and the fourth downlink channel or signal scheduled by the third downlink grant transmitted in the search space associated with the first control resource set carries the synchronization assistance information. An SSBO transmitted over an SSB resource 0 and an SSB1 transmitted over an SSB resource 1 do not have a QCL relationship. For example, the SSBO is associated with a spatial filter 0 (or a beam 0), and the SSB1 is associated with a spatial filter 1 (or a beam 1). The SSBO, the first control resource set associated with the SSBO, and the fourth downlink channel or signal scheduled by the third downlink grant transmitted in the search space associated with the first control resource set have a QCL relationship.

In a case where the fourth downlink channel or signal carries a SIB 1message, the first uplink channel or signal is not configured to request transmission of the SIB 1 message; and/or in a case where the fourth downlink channel carries a SIB19 message, the first uplink channel or signal is not configured to request transmission of the SIB19 message.

In the embodiments, the first downlink channel or signal carries configuration information of the first control resource set, and the terminal device receives, upon receiving the first downlink channel or signal, the third downlink grant in the first control resource set, and then acquires the synchronization assistance information from the fourth downlink channel or signal scheduled by the third downlink grant.

In some embodiments, the first uplink resource is determined based on at least one of the first downlink resource or the first downlink channel or signal.

In some embodiments, the terminal device determines the first uplink resource based on at least one of the first downlink resource or the first downlink channel or signal.

In some embodiments, the first uplink resource being determined based on at least one of the first downlink resource or the first downlink channel or signal includes a case where at least one of a time-domain position of the first uplink resource, a frequency-domain position of the first uplink resource, a reference signal sequence associated with the first uplink resource, or QCL information associated with the first uplink resource is determined based on at least one of the first downlink resource or the first downlink channel or signal.

In some embodiments, the first uplink resource being determined based on at least one of the first downlink resource or the first downlink channel or signal includes at least one of the following items:
a time-domain position of the first uplink resource is determined based on a time-domain position of the first downlink resource;
a time-domain position of the first uplink resource is determined based on a time-domain position of a first downlink reference signal within the first downlink channel or signal;
a frequency-domain position of the first uplink resource is determined based on a frequency-domain position of the first downlink resource;
a reference signal sequence associated with the first uplink resource is determined based on a first downlink reference signal within the first downlink channel or signal;
QCL information associated with the first uplink resource is determined based on QCL information associated with the first downlink resource;
the first downlink channel or signal carries indication information of a time-domain position of the first uplink resource;
the first downlink channel or signal carries indication information of a frequency-domain position of the first uplink resource;
the first downlink channel or signal carries indication information of a reference signal sequence associated with the first uplink resource; or
the first downlink channel or signal carries indication information of QCL information associated with the first uplink resource.

In some embodiments, the first uplink resource being determined based on at least one of the first downlink resource or the first downlink channel or signal includes a case where the first uplink resource is determined based on a mapping between the first uplink resource and the first downlink resource. The mapping between the first uplink resource and the first downlink resource is predefined or preconfigured, or is indicated by the first downlink channel or signal. In some embodiments, the mapping between the first uplink resource and the first downlink resource is directly or indirectly indicated by the first downlink channel or signal.

For example, an interval between a start time-domain position of the first uplink resource and a start time-domain position or an end time-domain position of the first downlink resource is a first drift, and the first drift is predefined or preconfigured, or is directly or indirectly indicated by the first downlink channel or signal.

For example, a start time-domain position of the first uplink resource is predefined or preconfigured, or is directly or indirectly indicated by the first downlink channel or signal.

For example, a number of symbols and/or slots occupied by the first uplink resource in the time domain is predefined or preconfigured, or is directly or indirectly indicated by the first downlink channel or signal; alternatively, a number of symbols and/or slots occupied by the first uplink resource in the time domain is determined based on a number of symbols and/or slots occupied by the first downlink resource in the time domain.

For example, an interval between a start frequency-domain position of the first uplink resource and a start frequency-domain position or an end frequency-domain position of the first downlink resource is a second drift, and the second drift is predefined or preconfigured, or is directly or indirectly indicated by the first downlink channel or signal.

For example, a start frequency-domain position of the first uplink resource is predefined or preconfigured, or is directly or indirectly indicated by the first downlink channel or signal.

For example, a size of a frequency-domain resource occupied by the first uplink resource in the frequency domain is predefined or preconfigured, or is directly or indirectly indicated by the first downlink channel or signal; alternatively, a size of a frequency-domain resource occupied by the first uplink resource in the frequency domain is determined based on a size of a frequency-domain resource occupied by the first downlink resource in the frequency domain. For example, the size of the frequency-domain resource occupied by the first uplink resource is determined based on the size of the frequency-domain resource occupied by the first downlink resource.

In some embodiments, first uplink resources are in one-to-one mapping to first downlink resources. FIG. 12 is a schematic diagram of correspondence of a first uplink resource to a first downlink resource according to some embodiments of the present disclosure. As illustrated in FIG. 12, two first downlink resources are contained in a period, and associated indexes thereof are 0 and 1. A first downlink resource 0 is associated with a first uplink resource 0, and a first downlink resource 1 is associated with a first uplink resource 1. The terminal device determines the first uplink resource 0 based on the first downlink resource 0 or the first downlink channel or signal transmitted over the first downlink resource 0, and determines the first uplink resource 1 based on the first downlink resource 1 or the first downlink channel or signal transmitted over the first downlink resource 1. Alternatively, the terminal device determines the first uplink resource 1 based on a position of the first downlink resource 0.

In some embodiments, a plurality of first uplink resources are mapped to one first downlink resource. For example, one first downlink resource is associated with a plurality of first uplink resources.

In some embodiments, in a case where one first downlink resource is associated with a plurality of first uplink resources, the plurality of first uplink resources are configured for different purposes. For example, one first downlink resource is associated with two first uplink resources, one of the two first uplink resources is configured to request transmission of the MIB or SIB1, and another of the two first uplink resources is configured to request rescue.

In some embodiments, the first uplink resource configured to request rescue is a first one of the plurality of first uplink resources, or is a last one of the plurality of first uplink resources.

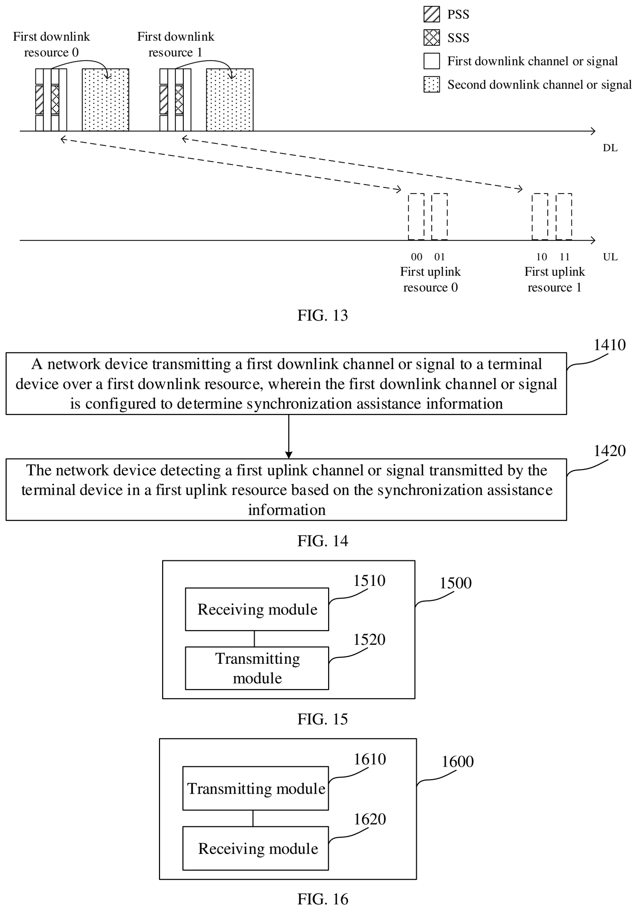

FIG. 13 is a schematic diagram of correspondence of two first uplink resources to a first downlink resource according to some embodiments of the present disclosure. As illustrated in FIG. 13, two first downlink resources are contained in a period, and associated indexes thereof are 0 and 1. A first downlink resource 0 is associated with first uplink resources 00 and 01, and a first downlink resource 1 is associated with first uplink resources 10 and 11. The terminal device determines the first uplink resources 00 and/or 01 based on the first downlink resource 0 or the first downlink channel or signal transmitted over the first downlink resource 0, and determines the first uplink resources 10 and/or 11 based on the first downlink resource 1 or the first downlink channel or signal transmitted over the first downlink resource 1. Alternatively, the terminal device determines the first uplink resources 10 and/or 10 based on positions of the first uplink resources 00 and/or 01. One of the first uplink resources 00 and 01 is configured to request transmission of the MIB or the SIB1, and the other of the first uplink resources 00 and 01 is configured to request rescue.

In some embodiments, in a case where one first downlink resource is associated with a plurality of first uplink resources, a start time-domain position of the first uplink resource is a start time-domain position of a first one of the plurality of first uplink resources.

In some embodiments, in a case where one first downlink resource is associated with a plurality of first uplink resources, an end time-domain position of the first uplink resource is an end time-domain position of a first one of the plurality of first uplink resources.

In some embodiments, in a case where one first downlink resource is associated with a plurality of first uplink resources, an end time-domain position of the first uplink resource is an end time-domain position of a last one of the plurality of first uplink resources.

In some embodiments, the synchronization assistance information is configured to indicate at least one of ephemeris information, a common TA parameter, reference epoch time indication information, or a duration of a target timer.

In some embodiments, the ephemeris information includes at least one of ephemeris information of one or more serving cell satellites, or ephemeris information of one or more neighboring cell satellites.

In some embodiments, the common TA parameter includes at least one of a common TA parameter associated with one or more serving cell satellites, or a common TA parameter associated with one or more neighboring cell satellites.

In some embodiments, the target timer includes at least one of a target timer associated with one or more serving cell satellites, or a target timer associated with one or more neighboring cell satellites.

In some embodiments, the synchronization assistance information includes the reference epoch time indication information, wherein the reference epoch time indication information is configured to determine a reference epoch time associated with the synchronization assistance information.

In some embodiments, the synchronization assistance information does not include the reference epoch time indication information, wherein a reference epoch time associated with the synchronization assistance information is determined based on at least one of a time-domain position of the first downlink resource, a time-domain position of a first downlink reference signal within the first downlink channel or signal, a time-domain position of a resource occupied by a downlink channel or signal carrying the synchronization assistance information, a time-domain position of a resource occupied by a downlink grant scheduling a downlink channel or signal carrying the synchronization assistance information, a time-domain position of a search space set associated with a downlink grant scheduling a downlink channel or signal carrying the synchronization assistance information, a time-domain position of a control resource set associated with a downlink grant scheduling a downlink channel or signal carrying the synchronization assistance information, or a time-domain position of the first uplink resource.

In some embodiments, the reference epoch time associated with the synchronization assistance information is determined based on the time-domain position of the first downlink resource. For example, an interval between a reference epoch time t0 associated with the synchronization assistance information and the start time-domain position or the end time-domain position of the first downlink resource is a third drift. The third drift is predefined or preconfigured, or is directly or indirectly indicated by the first downlink channel or signal. For example, the reference epoch time t0 associated with the synchronization assistance information is coincident with the start time-domain position of the first downlink resource, or the reference epoch time t0 associated with the synchronization assistance information is coincident with the end time-domain position of the first downlink resource.

In some embodiments, the reference epoch time associated with the synchronization assistance information is determined based on the time-domain position of the first downlink reference signal within the first downlink channel or signal. For example, an interval between the reference epoch time t0 associated with the synchronization assistance information and a start time-domain position or an end time-domain position of a first or last downlink reference signal in the first downlink signal is a fourth drift. The fourth drift is predefined or preconfigured, or is directly or indirectly indicated by the first downlink channel or signal. For example, the reference epoch time t0 associated with the synchronization assistance information is coincident with the start time-domain position of the first downlink reference signal in the first reference downlink signal, or the reference epoch time t0 associated with the synchronization assistance information is coincident with the end time-domain position of the last downlink reference signal in the first reference downlink signal.

In some embodiments, the reference epoch time associated with the synchronization assistance information is determined based on the time-domain position of the resource occupied by the downlink channel or signal carrying the synchronization assistance information. For example, in a case where the first downlink channel or signal carries the synchronization assistance information, the reference epoch time t0 associated with the synchronization assistance information is determined based on the time-domain position of the resource occupied by the first downlink channel or signal. For example, in a case where the second downlink channel or signal scheduled by the first downlink grant carries the synchronization assistance information, the reference epoch time t0 associated with the synchronization assistance information is determined based on the time-domain position of the resource occupied by the second downlink channel or signal. For example, in a case where the third downlink channel or signal scheduled by the second downlink grant carries the synchronization assistance information, the reference epoch time t0 associated with the synchronization assistance information is determined based on the time-domain position of the resource occupied by the third downlink channel or signal. For example, in a case where the fourth downlink channel or signal scheduled by the third downlink grant carries the synchronization assistance information, the reference epoch time t0 associated with the synchronization assistance information is determined based on the time-domain position of the resource occupied by the fourth downlink channel or signal.

In some embodiments, the reference epoch time associated with the synchronization assistance information is determined based on the time-domain position of the resource occupied by the downlink grant scheduling the downlink channel or signal carrying the synchronization assistance information. For example, in a case where the second downlink channel or signal scheduled by the first downlink grant carries the synchronization assistance information, the reference epoch time t0 associated with the synchronization assistance information is determined based on the time-domain position of the resource occupied by the first downlink grant. For example, in a case where the third downlink channel or signal scheduled by the second downlink grant carries the synchronization assistance information, the reference epoch time t0 associated with the synchronization assistance information is determined based on the time-domain position of the resource occupied by the second downlink grant. For example, in a case where the fourth downlink channel or signal scheduled by the third downlink grant carries the synchronization assistance information, the reference epoch time t0 associated with the synchronization assistance information is determined based on the time-domain position of the resource occupied by the third downlink grant.

In some embodiments, the reference epoch time associated with the synchronization assistance information is determined based on the time-domain position of the search space set associated with the downlink grant scheduling the downlink channel or signal carrying the synchronization assistance information. For example, in a case where the second downlink channel or signal scheduled by the first downlink grant carries the synchronization assistance information, the reference epoch time t0 associated with the synchronization assistance information is determined based on the time-domain position of the search space set associated with the first downlink grant. For example, in a case where the third downlink channel or signal scheduled by the second downlink grant carries the synchronization assistance information, the reference epoch time t0 associated with the synchronization assistance information is determined based on the time-domain position of the search space set associated with the second downlink grant. For example, in a case where the fourth downlink channel or signal scheduled by the third downlink grant carries the synchronization assistance information, the reference epoch time t0 associated with the synchronization assistance information is determined based on the time-domain position of the search space set associated with the third downlink grant.

In some embodiments, the reference epoch time associated with the synchronization assistance information is determined based on the time-domain position of the control resource set associated with the downlink grant scheduling the downlink channel or signal carrying the synchronization assistance information. For example, in a case where the second downlink channel or signal scheduled by the first downlink grant carries the synchronization assistance information, the reference epoch time t0 associated with the synchronization assistance information is determined based on the time-domain position of the control resource set associated with the first downlink grant. For example, in a case where the third downlink channel or signal scheduled by the second downlink grant carries the synchronization assistance information, the reference epoch time t0 associated with the synchronization assistance information is determined based on the time-domain position of the control resource set associated with the second downlink grant. For example, in a case where the fourth downlink channel or signal scheduled by the third downlink grant carries the synchronization assistance information, the reference epoch time t0 associated with the synchronization assistance information is determined based on the time-domain position of the control resource set associated with the third downlink grant.

In some embodiments, the reference epoch time associated with the synchronization assistance information is determined based on the time-domain position of the first uplink resource. For example, an interval between the reference epoch time t0 associated with the synchronization assistance information and a start time-domain position or an end time-domain position of the first uplink resource is a fifth drift. The fourth drift is predefined or preconfigured, or is directly or indirectly indicated by the first downlink channel or signal. For example, the reference epoch time t0 associated with the synchronization assistance information is coincident with the start time-domain position of the first downlink resource, or the reference epoch time t0 associated with the synchronization assistance information is coincident with the end time-domain position of the first downlink resource.

In some embodiments, in a case where the synchronization assistance information does not include the reference epoch time indication information, and one first downlink resource is associated with a plurality of first uplink resources, the reference epoch time t0 associated with the synchronization assistance information is determined based on the time-domain position of at least one of the plurality of first uplink resources (for example, the first or last one of the plurality of first uplink resources).

In some embodiments, the reference epoch time t0 associated with the synchronization assistance information includes: a reference epoch time t0 associated with at least one ephemeris information in the synchronization assistance information, and/or a reference epoch time t0 associated with at least one common TA parameter in the synchronization assistance information, and/or a reference epoch time t0 associated with at least one target timer in the synchronization assistance information.

FIG. 14 is a flowchart of a method for wireless communication according to some embodiments of the present disclosure. The method may be performed by a network device. The method may include at least one of the following processes (S 1410 to S 1420).

In S 1410, a network device transmits a first downlink channel or signal to a terminal device over a first downlink resource, wherein the first downlink channel or signal is configured to determine synchronization assistance information.

In some embodiments, the network device transmits the first downlink channel or signal to a terminal device over a first downlink resource by a broadcast mode. Correspondingly, the terminal device may detect and acquire the first downlink channel or signal from the network device over the first downlink resource, and determine the synchronization assistance information based on the first downlink channel or signal.

In S 1420, the network device detects a first uplink channel or signal transmitted by the terminal device in a first uplink resource based on the synchronization assistance information.

In some embodiments, upon transmitting the first downlink channel or signal, the network device performs blind detection. In a case where the terminal device transmits a first uplink channel or signal over a first uplink resource based on the synchronization assistance information, the network device detects the first uplink channel or signal transmitted by the terminal device.

For details in the embodiments of implemented by the network device, reference may be made to related description in the embodiments implemented by the terminal device, which are not described herein any further.

The above processes performed by the terminal device may be separately implemented as the method for wireless communication on the terminal device side, and the above processes performed by the network device may be separately implemented as the method for wireless communication on the network device side.

Hereinafter are apparatus embodiments of the present disclosure, which may be used to perform the method embodiments of the present disclosure. For details not disclosed in the apparatus embodiments of the present disclosure, reference may be made to the method embodiments of the present disclosure.

FIG. 15 is a block diagram of an apparatus for wireless communication according to some embodiments of the present disclosure. The apparatus has functions for implementing the method embodiments implemented by the terminal device. The function may be implemented by hardware or by hardware executing corresponding software. The apparatus may be the terminal device as described above or may be provided in the terminal device. As illustrated in FIG. 15, the apparatus 1500 may include a receiving module 1510 and a transmitting module 1520.

The receiving module 1510 is configured to receive a first downlink channel or signal from a network device over a first downlink resource, wherein the first downlink channel or signal is configured to determine synchronization assistance information; and

The transmitting module 1520 is configured to transmit a first uplink channel or signal to the network device over a first uplink resource based on the synchronization assistance information.

In some embodiments, the first downlink channel or signal includes a first downlink reference signal, wherein the first downlink reference signal is configured for the terminal device to achieve downlink synchronization, and/or to demodulate other channels or signals within the first downlink channel or signal than the first downlink reference signal.

In some embodiments, the first downlink reference signal includes one or more downlink synchronized signals.

In some embodiments, the first uplink channel or signal is configured to request at least one of: transmission of a MIB, transmission of information carried in a PBCH, transmission of SIB1, transmission of a system message, transmission of SIB 19, rescue, or transmission of a high-priority traffic.

In some embodiments, the first downlink channel or signal carries at least one of a MIB or information carried in a PBCH.

In some embodiments, the first uplink channel or signal is not configured to request transmission of the MIB.

In some embodiments, the first downlink channel or signal being configured to determine the synchronization assistance information includes a case where the first downlink channel or signal carries the synchronization assistance information.

In some embodiments, the first downlink channel or signal being configured to determine the synchronization assistance information includes a case where the first downlink channel or signal carries a first downlink grant, and a second downlink channel or signal scheduled by the first downlink grant carries the synchronization assistance information.

In some embodiments, the first downlink channel or signal includes a first PDCCH, wherein the first PDCCH carries the first downlink grant, and is scrambled with an SI-RNTI or a common RNTI.

In some embodiments, the first downlink grant is configured to determine at least one of: allocation information of a time-domain resource occupied by the second downlink channel or signal, allocation information of a frequency-domain resource occupied by the second downlink channel or signal, an MCS of a TB in the second downlink channel or signal, an RV of an RB in the second downlink channel or signal, whether the second downlink channel or signal includes an indication of a MIB, whether the second downlink channel or signal includes an indication of information carried in a PBCH, whether the second downlink channel or signal includes an indication of a SIB1, whether the second downlink channel or signal includes an indication of a SIB19, whether the second downlink channel or signal includes an indication of the synchronization assistance information, QCL information associated with the second downlink channel or signal, or an antenna polarization mode of a satellite.

In some embodiments, the second downlink channel or signal is configured to determine at least one of: whether the second downlink channel or signal includes an indication of a MIB, whether the second downlink channel or signal includes an indication of information carried in a PBCH, whether the second downlink channel or signal includes an indication of a SIB 1, whether the second downlink channel or signal includes an indication of a SIB19, whether the second downlink channel or signal includes an indication of the synchronization assistance information, QCL information associated with the second downlink channel or signal, or an antenna polarization mode of a satellite.

In some embodiments, in a case where the first downlink channel or signal carries a MIB, or in a case where it is determined, based on the first downlink grant or the second downlink channel or signal, that the second downlink channel or signal includes a MIB, the first uplink channel or signal is not configured to request transmission of the MIB.

In some embodiments, in a case where the first downlink channel or signal carries information carried in the PBCH, or in a case where it is determined, based on the first downlink grant or the second downlink channel or signal, that the second downlink channel or signal includes information carried in the PBCH, the first uplink channel or signal is not configured to request transmission of the information carried in the PBCH.

In some embodiments, in a case where it is determined, based on the first downlink grant or the second downlink channel or signal, that the second downlink channel or signal includes a SIB1, the first uplink channel or signal is not configured to request transmission of the SIB1.

In some embodiments, in a case where it is determined, based on the first downlink grant or the second downlink channel or signal, that the second downlink channel or signal includes a SIB19, the first uplink channel or signal is not configured to request transmission of the SIB19.

In some embodiments, the first downlink channel or signal being configured to determine the synchronization assistance information includes a case where the first downlink channel or signal carries configuration information of a first search space set, the first search space set is configured to transmit a second downlink grant, and a third downlink channel or signal scheduled by the second downlink grant carries the synchronization assistance information.

In some embodiments, the first search space set being configured to transmit the second downlink grant includes a case where the first search space set is configured to transmit a second PDCCH, wherein the second PDCCH carries the second downlink grant.

In some embodiments, the first search space set is a type 0-PDCCH CSS set, and the first downlink channel or signal includes a PBCH, wherein the PBCH carries configuration information of the type 0-PDCCH CSS set.

In some embodiments, the second downlink grant is configured to determine at least one of: allocation information of a time-domain resource occupied by the third downlink channel or signal, allocation information of a frequency-domain resource occupied by the third downlink channel or signal, an MCS of a TB in the third downlink channel or signal, an RV of an RB in the third downlink channel or signal, whether the third downlink channel or signal includes an indication of a MIB, whether the third downlink channel or signal includes an indication of information carried in a PBCH, whether the third downlink channel or signal includes an indication of a SIB1, whether the third downlink channel or signal includes an indication of a SIB19, whether the third downlink channel or signal includes an indication of the synchronization assistance information, QCL information associated with the third downlink channel or signal, or an antenna polarization mode of a satellite.

In some embodiments, the third downlink channel or signal is configured to determine at least one of: whether the third downlink channel or signal includes an indication of a MIB, whether the third downlink channel or signal includes an indication of information carried in a PBCH, whether the third downlink channel or signal includes an indication of a SIB1, whether the third downlink channel or signal includes an indication of a SIB19, whether the third downlink channel or signal includes an indication of the synchronization assistance information, QCL information associated with the third downlink channel or signal, or an antenna polarization mode of a satellite.

In some embodiments, in a case where the first downlink channel or signal carries a MIB, or in a case where it is determined, based on the second downlink grant or the third downlink channel or signal, that the third downlink channel or signal includes a MIB, the first uplink channel or signal is not configured to request transmission of the MIB.

In some embodiments, in a case where the first downlink channel or signal carries information carried in the PBCH, or in a case where it is determined, based on the second downlink grant or the third downlink channel or signal, that the third downlink channel or signal includes information carried in the PBCH, the first uplink channel or signal is not configured to request transmission of the information carried in the PBCH.

In some embodiments, in a case where it is determined, based on the second downlink grant or the third downlink channel or signal, that the third downlink channel or signal includes a SIB1, the first uplink channel or signal is not configured to request transmission of the SIB1.

In some embodiments, in a case where it is determined, based on the second downlink grant or the third downlink channel or signal, that the third downlink channel or signal includes a SIB19, the first uplink channel or signal is not configured to request transmission of the SIB19.

In some embodiments, the first downlink channel or signal being configured to determine the synchronization assistance information includes a case where the first downlink channel or signal carries configuration information of a first control resource set, the first control resource set is configured to transmit a third downlink grant, and a fourth downlink channel or signal scheduled by the third downlink grant carries the synchronization assistance information.

In some embodiments, the first control resource set being configured to transmit the third downlink grant includes a case where the first control resource set is configured to transmit a third PDCCH, wherein the third PDCCH carries the third downlink grant.

In some embodiments, the first control resource set is a type 0-PDCCH CSS set, and the first downlink channel or signal includes a PBCH, wherein the PBCH carries configuration information of the first control resource set.

In some embodiments, the third downlink grant is configured to determine at least one of: allocation information of a time-domain resource occupied by the fourth downlink channel or signal, allocation information of a frequency-domain resource occupied by the fourth downlink channel or signal, an MCS of a TB in the fourth downlink channel or signal, an RV of an RB in the fourth downlink channel or signal, whether the fourth downlink channel or signal includes an indication of a MIB, whether the fourth downlink channel or signal includes an indication of information carried in a PBCH, whether the fourth downlink channel or signal includes an indication of a SIB1, whether the fourth downlink channel or signal includes an indication of a SIB19, whether the fourth downlink channel or signal includes an indication of the synchronization assistance information, QCL information associated with the fourth downlink channel or signal, or an antenna polarization mode of a satellite.

In some embodiments, the fourth downlink channel or signal is configured to determine at least one of: whether the fourth downlink channel or signal includes an indication of a MIB, whether the fourth downlink channel or signal includes an indication of information carried in a PBCH, whether the fourth downlink channel or signal includes an indication of SIB 1, whether the fourth downlink channel or signal includes an indication of a SIB19, whether the fourth downlink channel or signal includes an indication of the synchronization assistance information, QCL information associated with the fourth downlink channel or signal, or an antenna polarization mode of a satellite.

In some embodiments, in a case where the first downlink channel or signal carries a MIB, or in a case where it is determined, based on the third downlink grant or the fourth downlink channel or signal, that the fourth downlink channel or signal includes a MIB, the first uplink channel or signal is not configured to request transmission of the MIB.

In some embodiments, in a case where the first downlink channel or signal carries information carried in the PBCH, or in a case where it is determined, based on the third downlink grant or the fourth downlink channel or signal, that the fourth downlink channel or signal includes information carried in the PBCH, the first uplink channel or signal is not configured to request transmission of the information carried in the PBCH.

In some embodiments, in a case where it is determined, based on the third downlink grant or the fourth downlink channel or signal, that the fourth downlink channel or signal includes a SIB1, the first uplink channel or signal is not configured to request transmission of the SIB1.

In some embodiments, in a case where it is determined, based on the third downlink grant or the fourth downlink channel or signal, that the fourth downlink channel or signal includes a SIB19, the first uplink channel or signal is not configured to request transmission of the SIB19.

In some embodiments, the first uplink resource is determined based on at least one of the first downlink resource or the first downlink channel or signal.

In some embodiments, the first uplink resource being determined based on at least one of the first downlink resource or the first downlink channel or signal includes at least one of the following items: a time-domain position of the first uplink resource is determined based on a time-domain position of the first downlink resource; a time-domain position of the first uplink resource is determined based on a time-domain position of a first downlink reference signal within the first downlink channel or signal; a frequency-domain position of the first uplink resource is determined based on a frequency-domain position of the first downlink resource; a reference signal sequence associated with the first uplink resource is determined based on a first downlink reference signal within the first downlink channel or signal; QCL information associated with the first uplink resource is determined based on QCL information associated with the first downlink resource; the first downlink channel or signal carries indication information of a time-domain position of the first uplink resource; the first downlink channel or signal carries indication information of a frequency-domain position of the first uplink resource; the first downlink channel or signal carries indication information of a reference signal sequence associated with the first uplink resource; or the first downlink channel or signal carries indication information of QCL information associated with the first uplink resource.

In some embodiments, the first uplink resource being determined based on at least one of the first downlink resource or the first downlink channel or signal includes a case where the first uplink resource is determined based on a mapping between the first uplink resource and the first downlink resource, wherein the mapping between the first uplink resource and the first downlink resource is predefined or preconfigured, or is indicated by the first downlink channel or signal.

In some embodiments, first uplink resources are in one-to-one mapping to first downlink resources, or a plurality of first uplink resources are mapped to one first downlink resource.

In some embodiments, the first uplink resource being determined based on at least one of the first downlink resource or the first downlink channel or signal includes a case where at least one of a time-domain position of the first uplink resource, a frequency-domain position of the first uplink resource, a reference signal sequence associated with the first uplink resource, or QCL information associated with the first uplink resource is determined based on at least one of the first downlink resource or the first downlink channel or signal.

In some embodiments, the synchronization assistance information is configured to indicate at least one of ephemeris information, a common TA parameter, reference epoch time indication information, or a duration of a target timer.

In some embodiments, the synchronization assistance information includes the reference epoch time indication information, wherein the reference epoch time indication information is configured to determine a reference epoch time associated with the synchronization assistance information.

In some embodiments, the synchronization assistance information does not include the reference epoch time indication information, wherein a reference epoch time associated with the synchronization assistance information is determined based on at least one of a time-domain position of the first downlink resource, a time-domain position of a first downlink reference signal within the first downlink channel or signal, a time-domain position of a resource occupied by a downlink channel or signal carrying the synchronization assistance information, a time-domain position of a resource occupied by a downlink grant scheduling a downlink channel or signal carrying the synchronization assistance information, a time-domain position of a search space set associated with a downlink grant scheduling a downlink channel or signal carrying the synchronization assistance information, a time-domain position of a control resource set associated with a downlink grant scheduling a downlink channel or signal carrying the synchronization assistance information, or a time-domain position of the first uplink resource.

In some embodiments, the ephemeris information includes at least one of ephemeris information of one or more serving cell satellites, or ephemeris information of one or more neighboring cell satellites.

In some embodiments, the common TA parameter includes at least one of a common TA parameter associated with one or more serving cell satellites, or a common TA parameter associated with one or more neighboring cell satellites.

In some embodiments, the target timer includes at least one of a target timer associated with one or more serving cell satellites, or a target timer associated with one or more neighboring cell satellites.

In some embodiments, the transmitting module 1520 is configured to transmit the first uplink channel or signal to the network device over the first uplink resource based on the synchronization assistance information upon uplink time-domain and/or frequency-domain synchronization.

In some embodiments, a time-domain resource occupied by the first downlink channel or signal is predefined, and/or a frequency-domain resource occupied by the first downlink channel or signal is predefined.

In some embodiments, the first downlink resource is a periodically configured downlink resource, and the first downlink channel or signal is periodically transmitted; and in a case where a plurality of first downlink resources are contained in a period, each of the plurality of first downlink resources is associated with an index, or the first downlink channel or signal transmitted over each of the plurality of first downlink resources is associated with an index.

In some embodiments, first downlink channels or signals that are transmitted over each of the plurality of first downlink resources and are associated with a same index have a QCL relationship, and/or first downlink channels or signals that are transmitted over each of the plurality of first downlink resources and are associated with different indexes do not have a QCL relationship.

In some embodiments, first downlink channels or signals associated with a same index have a QCL relationship, and/or first downlink channels or signals associated with different indexes do not have a QCL relationship.

FIG. 16 is a block diagram of an apparatus for wireless communication according to some embodiments of the present disclosure. The apparatus has functions for implementing the method embodiments implemented by the network device. The function may be implemented by hardware or by hardware executing corresponding software. The apparatus may be the network device described above or may be provided in the network device. As illustrated in FIG. 16, the apparatus 1600 may include a transmitting module 1610 and a receiving module 1620.

The transmitting module 1610 is configured to transmit a first downlink channel or signal to a terminal device over a first downlink resource, wherein the first downlink channel or signal is configured to determine synchronization assistance information; and

The receiving module 1620 is configured to detect a first uplink channel or signal transmitted by the terminal device in a first uplink resource based on the synchronization assistance information.

In some embodiments, the first downlink channel or signal includes a first downlink reference signal, wherein the first downlink reference signal is configured for the terminal device to achieve downlink synchronization, and/or to demodulate other channels or signals within the first downlink channel or signal than the first downlink reference signal.

In some embodiments, the first downlink reference signal includes one or more downlink synchronized signals.

In some embodiments, the first uplink channel or signal is configured to request at least one of: transmission of a MIB, transmission of information carried in a PBCH, transmission of SIB1, transmission of a system message, transmission of a SIB 19, rescue, or transmission of a high-priority traffic.

In some embodiments, the first downlink channel or signal carries at least one of a MIB or information carried in a PBCH.

In some embodiments, the first uplink channel or signal is not configured to request transmission of the MIB.

In some embodiments, the first downlink channel or signal being configured to determine the synchronization assistance information includes a case where the first downlink channel or signal carries the synchronization assistance information.

In some embodiments, the first downlink channel or signal being configured to determine the synchronization assistance information includes a case where the first downlink channel or signal carries a first downlink grant, and a second downlink channel or signal scheduled by the first downlink grant carries the synchronization assistance information.

In some embodiments, the first downlink channel or signal includes a first PDCCH, wherein the first PDCCH carries the first downlink grant, and is scrambled with an SI-RNTI or a common RNTI.

In some embodiments, the first downlink grant is configured to determine at least one of: allocation information of a time-domain resource occupied by the second downlink channel or signal, allocation information of a frequency-domain resource occupied by the second downlink channel or signal, an MCS of a TB in the second downlink channel or signal, an RV of an RB in the second downlink channel or signal, whether the second downlink channel or signal includes an indication of a MIB, whether the second downlink channel or signal includes an indication of information carried in a PBCH, whether the second downlink channel or signal includes an indication of a SIB1, whether the second downlink channel or signal includes an indication of a SIB19, whether the second downlink channel or signal includes an indication of the synchronization assistance information, QCL information associated with the second downlink channel or signal, or an antenna polarization mode of a satellite.

In some embodiments, the second downlink channel or signal is configured to determine at least one of: whether the second downlink channel or signal includes an indication of a MIB, whether the second downlink channel or signal includes an indication of information carried in a PBCH, whether the second downlink channel or signal includes an indication of SIB1, whether the second downlink channel or signal includes an indication of a SIB19, whether the second downlink channel or signal includes an indication of the synchronization assistance information, QCL information associated with the second downlink channel or signal, or an antenna polarization mode of a satellite.

In some embodiments, in a case where the first downlink channel or signal carries a MIB, or in a case where it is determined, based on the first downlink grant or the second downlink channel or signal, that the second downlink channel or signal includes a MIB, the first uplink channel or signal is not configured to request transmission of the MIB.

In some embodiments, in a case where the first downlink channel or signal carries information carried in the PBCH, or in a case where it is determined, based on the first downlink grant or the second downlink channel or signal, that the second downlink channel or signal includes information carried in the PBCH, the first uplink channel or signal is not configured to request transmission of the information carried in the PBCH.

In some embodiments, in a case where it is determined, based on the first downlink grant or the second downlink channel or signal, that the second downlink channel or signal includes a SIB1, the first uplink channel or signal is not configured to request transmission of the SIB1.

In some embodiments, in a case where it is determined, based on the first downlink grant or the second downlink channel or signal, that the second downlink channel or signal includes a SIB19, the first uplink channel or signal is not configured to request transmission of the SIB19.

In some embodiments, the first downlink channel or signal being configured to determine the synchronization assistance information includes a case where the first downlink channel or signal carries configuration information of a first search space set, the first search space set is configured to transmit a second downlink grant, and a third downlink channel or signal scheduled by the second downlink grant carries the synchronization assistance information.

In some embodiments, the first search space set being configured to transmit the second downlink grant includes a case where the first search space set is configured to transmit a second PDCCH, wherein the second PDCCH carries the second downlink grant.

In some embodiments, the first search space set is a type 0-PDCCH CSS set, and the first downlink channel or signal includes a PBCH, wherein the PBCH carries configuration information of the type 0-PDCCH CSS set.

In some embodiments, the second downlink grant is configured to determine at least one of: allocation information of a time-domain resource occupied by the third downlink channel or signal, allocation information of a frequency-domain resource occupied by the third downlink channel or signal, an MCS of a TB in the third downlink channel or signal, an RV of an RB in the third downlink channel or signal, whether the third downlink channel or signal includes an indication of a MIB, whether the third downlink channel or signal includes an indication of information carried in a PBCH, whether the third downlink channel or signal includes an indication of a SIB 1, whether the third downlink channel or signal includes an indication of a SIB 19, whether the third downlink channel or signal includes an indication of the synchronization assistance information, QCL information associated with the third downlink channel or signal, or an antenna polarization mode of a satellite.

In some embodiments, the third downlink channel or signal is configured to determine at least one of: whether the third downlink channel or signal includes an indication of a MIB, whether the third downlink channel or signal includes an indication of information carried in a PBCH, whether the third downlink channel or signal includes an indication of SIB 1, whether the third downlink channel or signal includes an indication of a SIB 19, whether the third downlink channel or signal includes an indication of the synchronization assistance information, QCL information associated with the third downlink channel or signal, or an antenna polarization mode of a satellite.

In some embodiments, in a case where the first downlink channel or signal carries a MIB, or in a case where it is determined, based on the second downlink grant or the third downlink channel or signal, that the third downlink channel or signal includes a MIB, the first uplink channel or signal is not configured to request transmission of the MIB.

In some embodiments, in a case where the first downlink channel or signal carries information carried in the PBCH, or in a case where it is determined, based on the second downlink grant or the third downlink channel or signal, that the third downlink channel or signal includes information carried in the PBCH, the first uplink channel or signal is not configured to request transmission of the information carried in the PBCH.

In some embodiments, in a case where it is determined, based on the second downlink grant or the third downlink channel or signal, that the third downlink channel or signal includes a SIB1, the first uplink channel or signal is not configured to request transmission of the SIB1.

In some embodiments, in a case where it is determined, based on the second downlink grant or the third downlink channel or signal, that the third downlink channel or signal includes a SIB 19, the first uplink channel or signal is not configured to request transmission of the SIB19.

In some embodiments, the first downlink channel or signal being configured to determine the synchronization assistance information includes a case where the first downlink channel or signal carries configuration information of a first control resource set, the first control resource set is configured to transmit a third downlink grant, and a fourth downlink channel or signal scheduled by the third downlink grant carries the synchronization assistance information.

In some embodiments, the first control resource set being configured to transmit the third downlink grant includes a case where the first control resource set is configured to transmit a third PDCCH, wherein the third PDCCH carries the third downlink grant.

In some embodiments, the first control resource set is a type 0-PDCCH CSS set, and the first downlink channel or signal includes a PBCH, wherein the PBCH carries configuration information of the first control resource set.

In some embodiments, the third downlink grant is configured to determine at least one of: allocation information of a time-domain resource occupied by the fourth downlink channel or signal, allocation information of a frequency-domain resource occupied by the fourth downlink channel or signal, an MCS of a TB in the fourth downlink channel or signal, an RV of an RB in the fourth downlink channel or signal, whether the fourth downlink channel or signal includes an indication of a MIB, whether the fourth downlink channel or signal includes an indication of information carried in a PBCH, whether the fourth downlink channel or signal includes an indication of a SIB1, whether the fourth downlink channel or signal includes an indication of a SIB19, whether the fourth downlink channel or signal includes an indication of the synchronization assistance information, QCL information associated with the fourth downlink channel or signal, or an antenna polarization mode of a satellite.

In some embodiments, the fourth downlink channel or signal is configured to determine at least one of: whether the fourth downlink channel or signal includes an indication of a MIB, whether the fourth downlink channel or signal includes an indication of information carried in a PBCH, whether the fourth downlink channel or signal includes an indication of SIB 1, whether the fourth downlink channel or signal includes an indication of a SIB 19, whether the fourth downlink channel or signal includes an indication of the synchronization assistance information, QCL information associated with the fourth downlink channel or signal, or an antenna polarization mode of a satellite.

In some embodiments, in a case where the first downlink channel or signal carries the MIB, or in a case where it is determined, based on the third downlink grant or the fourth downlink channel or signal, that the fourth downlink channel or signal includes a MIB, the first uplink channel or signal is not configured to request transmission of the MIB.

In some embodiments, in a case where the first downlink channel or signal carries information carried in the PBCH, or in a case where it is determined, based on the third downlink grant or the fourth downlink channel or signal, that the fourth downlink channel or signal includes information carried in the PBCH, the first uplink channel or signal is not configured to request transmission of the information carried in the PBCH.

In some embodiments, in a case where it is determined, based on the third downlink grant or the fourth downlink channel or signal, that the fourth downlink channel or signal includes a SIB 1, the first uplink channel or signal is not configured to request transmission of the SIB1.

In some embodiments, in a case where it is determined, based on the third downlink grant or the fourth downlink channel or signal, that the fourth downlink channel or signal includes a SIB 19, the first uplink channel or signal is not configured to request transmission of the SIB19.

In some embodiments, the first uplink resource is determined based on at least one of the first downlink resource or the first downlink channel or signal.

In some embodiments, the first uplink resource being determined based on at least one of the first downlink resource or the first downlink channel or signal includes at least one of the following items: a time-domain position of the first uplink resource is determined based on a time-domain position of the first downlink resource; a time-domain position of the first uplink resource is determined based on a time-domain position of a first downlink reference signal within the first downlink channel or signal; a frequency-domain position of the first uplink resource is determined based on a frequency-domain position of the first downlink resource; a reference signal sequence associated with the first uplink resource is determined based on a first downlink reference signal within the first downlink channel or signal; QCL information associated with the first uplink resource is determined based on QCL information associated with the first downlink resource; the first downlink channel or signal carries indication information of a time-domain position of the first uplink resource; the first downlink channel or signal carries indication information of a frequency-domain position of the first uplink resource; the first downlink channel or signal carries indication information of a reference signal sequence associated with the first uplink resource; or the first downlink channel or signal carries indication information of QCL information associated with the first uplink resource.

In some embodiments, the first uplink resource being determined based on at least one of the first downlink resource or the first downlink channel or signal includes a case where the first uplink resource is determined based on a mapping between the first uplink resource and the first downlink resource, wherein the mapping between the first uplink resource and the first downlink resource is predefined or preconfigured, or is indicated by the first downlink channel or signal.

In some embodiments, first uplink resources are in one-to-one mapping to first downlink resources, or a plurality of first uplink resources are mapped to one first downlink resource.

In some embodiments, the first uplink resource being determined based on at least one of the first downlink resource or the first downlink channel or signal includes a case where at least one of a time-domain position of the first uplink resource, a frequency-domain position of the first uplink resource, a reference signal sequence associated with the first uplink resource, or QCL information associated with the first uplink resource is determined based on at least one of the first downlink resource or the first downlink channel or signal.

In some embodiments, the synchronization assistance information is configured to indicate at least one of ephemeris information, a common TA parameter, reference epoch time indication information, or a duration of a target timer.

In some embodiments, the synchronization assistance information includes the reference epoch time indication information, wherein the reference epoch time indication information is configured to determine a reference epoch time associated with the synchronization assistance information.

In some embodiments, the synchronization assistance information does not include the reference epoch time indication information, wherein a reference epoch time associated with the synchronization assistance information is determined based on at least one of a time-domain position of the first downlink resource, a time-domain position of a first downlink reference signal within the first downlink channel or signal, a time-domain position of a resource occupied by a downlink channel or signal carrying the synchronization assistance information, a time-domain position of a resource occupied by a downlink grant scheduling a downlink channel or signal carrying the synchronization assistance information, a time-domain position of a search space set associated with a downlink grant scheduling a downlink channel or signal carrying the synchronization assistance information, a time-domain position of a control resource set associated with a downlink grant scheduling a downlink channel or signal carrying the synchronization assistance information, or a time-domain position of the first uplink resource.

In some embodiments, the ephemeris information includes at least one of ephemeris information of one or more serving cell satellites, or ephemeris information of one or more neighboring cell satellites.

In some embodiments, the common TA parameter includes at least one of a common TA parameter associated with one or more serving cell satellites, or a common TA parameter associated with one or more neighboring cell satellites.

In some embodiments, the target timer includes at least one of a target timer associated with one or more serving cell satellites, or a target timer associated with one or more neighboring cell satellites.

In some embodiments, the first uplink channel or signal is transmitted by the terminal device based on the synchronization assistance information upon uplink time-domain and/or frequency-domain synchronization.

In some embodiments, a time-domain resource occupied by the first downlink channel or signal is predefined, and/or a frequency-domain resource occupied by the first downlink channel or signal is predefined.

In some embodiments, the first downlink resource is a periodically configured downlink resource, and the first downlink channel or signal is periodically transmitted; and in a case where a plurality of first downlink resources are contained in a period, each of the plurality of first downlink resources is associated with an index, or the first downlink channel or signal transmitted over each of the plurality of first downlink resources is associated with an index.

In some embodiments, first downlink channels or signals that are transmitted over each of the plurality of first downlink resources and are associated with a same index have a QCL relationship, and/or first downlink channels or signals that are transmitted over each of the plurality of first downlink resources and are associated with different indexes do not have a QCL relationship.

In some embodiments, first downlink channels or signals associated with a same index have a QCL relationship, and/or first downlink channels or signals associated with different indexes do not have a QCL relationship.

It should be noted that when the apparatus according to the embodiments implements its functions, division of the functional modules is merely exemplary. In actual applications, the functions may be assigned to and implemented by different functional modules as required, that is, the apparatus is divided into different functional modules to implement all or some of the foregoing functions.

Regarding the apparatus according to the above embodiments, specific manners of performing operations by the modules have been described in detail in the embodiments of the related method, and details are not described herein any further.

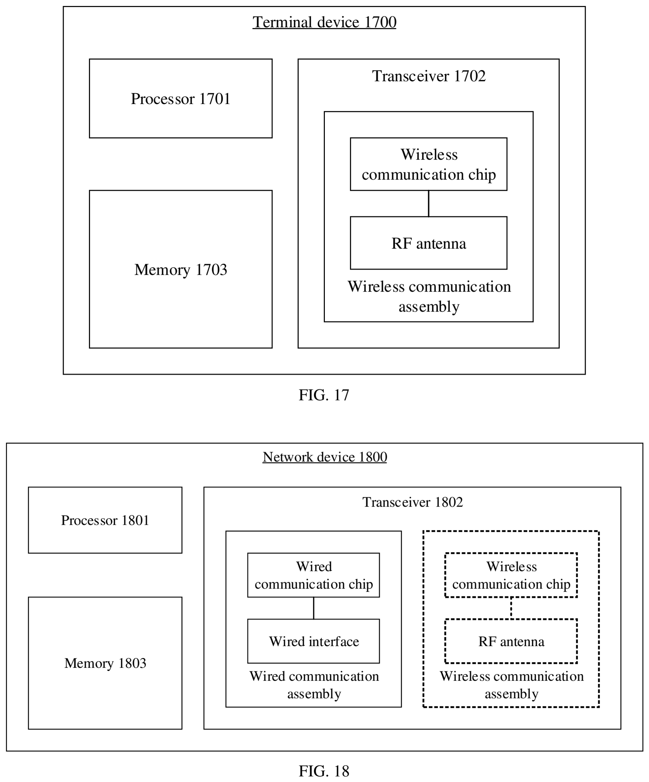

FIG. 17 is a schematic structural diagram of a terminal device 1700 according to some embodiments of the present disclosure. The terminal device 1700 may be configured to perform the method processes performed by the terminal device in the above embodiments. The terminal device 1700 may include a processor 1701, a transceiver 1702, and a memory 1703.

The processor 1701 includes one or more processing cores. The processor 1701 achieves various functional applications and perform information processing by running one or more software programs and modules.

The transceiver 1702 includes a receiver and a transmitter. For example, the receiver and the transmitter are practiced as a same wireless communication assembly, and the wireless communication assembly may include a wireless communication chip and a radio frequency (RF) antenna.

The memory 1703 is communicably connected to the processor 1701 and the transceiver 1702.

The memory 1703 is configured to store one or more computer programs runnable by the processor, and the processor 1701 is configured to run the one or more computer programs to implement various processes performed by the terminal device in the above method embodiments.

In addition, the memory 1703 is practiced by any type of volatile or non-volatile storage device or a combination thereof. The volatile or non-volatile storage device includes but is not limited to: a magnetic disk or an optical disc, an electrically erasable programmable read-only memory (EEPROM), an erasable programmable read-only memory (EPROM), a static random-access memory (SRAM), a read-only memory (ROM), a magnetic memory, a flash memory, or a programmable read-only memory (PROM).

In some embodiments, the transceiver 1702 is configured to receive a first downlink channel or signal from a network device over a first downlink resource, wherein the first downlink channel or signal is configured to determine synchronization assistance information; and transmit a first uplink channel or signal to the network device over a first uplink resource based on the synchronization assistance information.

For details not described in the above embodiments, reference may be made to the description in the above method embodiments, which are not described herein any further.

FIG. 12 is a schematic structural diagram of a network device 1800 according to some embodiments of the present disclosure. The network device 1800 may be configured to perform the method processes performed by the network device in the above embodiments. The network device 1800 may include a processor 1801, a transceiver 1802, and a memory 1803.

The processor 1801 includes one or more processing cores. The processor 1801 achieves various functional applications and perform information processing by running one or more software programs and modules.

The transceiver 1802 includes a receiver and a transmitter. For example, the transceiver 1802 includes a wired communication assembly, and the wired communication assembly includes a wired communication chip and a wired interface (for example, a fiber interface). In some embodiments, the transceiver 1802 further includes a wireless communication assembly, and the wireless communication assembly includes a wireless communication chip and an RF antenna.

The memory 1803 is communicably connected to the processor 1801 and the transceiver 1802.

The memory 1803 is configured to store one or more computer programs run by the processor, and the processor 1801 is configured to run the one or more computer programs to implement various processes performed by the network device in the above method embodiments.

In addition, the memory 1803 is practiced by any type of volatile or non-volatile storage device or a combination thereof. The volatile or non-volatile storage device includes but is not limited to: a magnetic disk or an optical disc, an EEPROM, an EPROM, an SRAM, a ROM, a magnetic memory, a flash memory, or a PROM.

In some embodiments, the transceiver 1802 is configured to transmit a first downlink channel or signal to a terminal device over a first downlink resource, wherein the first downlink channel or signal is configured to determine synchronization assistance information; and detect a first uplink channel or signal transmitted by the terminal device in a first uplink resource based on the synchronization assistance information.

For details not described in the embodiments, reference may be made to the description in the above embodiments, which are not described herein any further.

Some embodiments of the present disclosure further provide a computer-readable storage medium. The storage medium stores one or more computer programs. The one or more computer programs, when loaded and run by a processor of a terminal device, cause the terminal device to perform the method for wireless communication performed by the terminal device.

Some embodiments of the present disclosure further provide a computer-readable storage medium. The storage medium stores one or more computer programs. The one or more computer programs, when loaded and run by a processor of a terminal device, cause the terminal device to perform the method for wireless communication performed by the network device.

In some embodiments, the computer-readable storage medium includes a ROM, a random-access memory (RAM), a solid-state drive (SSD), an optical disc, or the like. The RAM may include a resistance random-access memory (ReRAM) and a dynamic random-access memory (DRAM).

Some embodiments of the present disclosure further provide a chip. The chip includes programmable logic circuitry and/or one or more program instructions. The chip, when running on a terminal device, cause the terminal device to perform the method for wireless communication performed by the terminal device.

Some embodiments of the present disclosure further provide a chip. The chip includes programmable logic circuitry and/or one or more program instructions. The chip, when running on a network device, cause the network device to perform the method for wireless communication performed by the network device.

Some embodiments of the present disclosure further provide a computer program product or a computer program. The computer program product or the computer program includes one or more computer instructions stored in a computer-readable storage medium. The one or more computer instructions, when read from the computer-readable storage medium and executed by a processor of a terminal device, cause the terminal device to perform the method for wireless communication performed by the terminal device.

Some embodiments of the present disclosure further provide a computer program product or a computer program. The computer program product or the computer program includes one or more computer instructions stored in a computer-readable storage medium. The one or more computer instructions, when read from the computer-readable storage medium and executed by a processor of a network device, cause the network device to perform the method for wireless communication performed by the network device.

It should be understood that the term "indicate" in the embodiments of the present disclosure means the direct indication, indirect indication, or an associated relationship. For example, A indicating B means that A directly indicates B, for example, B is acquired via A; A indirectly indicates B, for example, A indicates C and B is acquired via C; A and B are associated.

The term "corresponding" and any grammatical variations mean that there is a direct correspondence relationship or indirect correspondence relationship between two objects, an association relationship between two objects, a relationship of indicating or being indicated, or a relationship of configuring and being configured.

In some embodiments of the present disclosure, the term "predefined" is implemented by pre-storing corresponding codes, tables, or other means that may be defined to indicate related information in devices (including, for example, terminal devices and network devices), and the present disclosure does not limit the specific implementation thereof. For example, "predefined" refers to "defined" in a protocol.

In some embodiments of the present disclosure, the "protocol" refers to a standard protocol in the communication field including, for example, the LTE protocol, the NR protocol, and related protocols applied in future communication systems, which is not limited in the present disclosure.

The mentioned term "a plurality of" herein means two or more. The term "and/or" describes the association relationship between the associated objects, and indicates that three relationships may be present. For example, the phrase "A and/or B" means (A), (B), or (A and B). The symbol "/" generally indicates an "or" relationship between the associated objects.

In addition, serial numbers of the processes described herein only show an exemplary possible sequence of performing the processes. In some other embodiments, the processes may also be performed out of the numbering sequence, for example, two processes with different serial numbers are performed simultaneously, or two processes with different serial numbers are performed in a reverse order to the illustrated sequence, which is not limited in the present disclosure.

Those skilled in the art should understand that in one or more of the above embodiments, the functions described in the embodiments of the present disclosure may be implemented in hardware, software, firmware, or any combination thereof. The functions, when implemented in software, may be stored in a computer-readable medium or transmitted as one or more instructions or codes on a computer-readable medium. The computer-readable medium includes a computer storage medium and a communication medium, wherein the communication medium includes any medium that facilitates the transfer of a computer program from one place to another. The storage medium is any available medium that is accessible by a general-purpose or special-purpose computer.

Described above are merely exemplary embodiments of the present disclosure and are not intended to limit the present disclosure. Any modifications, equivalent substitutions, improvements, and the like, made within the spirit and principle of the present disclosure should fall within the protection scope of the present disclosure.

## Claims

1. A method for wireless communication, performed by a terminal device, the method comprising:
receiving a first downlink channel or signal from a network device over a first downlink resource, wherein the first downlink channel or signal is used to determine synchronization assistance information; and
transmitting a first uplink channel or signal to the network device over a first uplink resource based on the synchronization assistance information.

2. The method according to claim 1, wherein the first downlink channel or signal comprises a first downlink reference signal, wherein the first downlink reference signal is configured for the terminal device to achieve downlink synchronization, and/or to demodulate other channels or signals within the first downlink channel or signal than the first downlink reference signal.

3. The method according to claim 2, wherein the first downlink reference signal comprises one or more downlink synchronized signals.

4. The method according to any one of claims 1 to 3, wherein the first uplink channel or signal is used to request at least one of: transmission of a master information block (MIB), transmission of information carried in a physical broadcast channel (PBCH), transmission of a system information block (SIB)1, transmission of a system message, transmission of a SIB19, rescue, or transmission of a high-priority traffic.

5. The method according to any one of claims 1 to 4, wherein the first downlink channel or signal carries at least one of a master information block (MIB) or information carried in a physical broadcast channel (PBCH).

6. The method according to claim 5, wherein the first uplink channel or signal is not configured to request transmission of the MIB.

7. The method according to any one of claims 1 to 6, wherein the first downlink channel or signal being configured to determine the synchronization assistance information comprises a case where the first downlink channel or signal carries the synchronization assistance information.

8. The method according to any one of claims 1 to 6, wherein the first downlink channel or signal being configured to determine the synchronization assistance information comprises a case where the first downlink channel or signal carries a first downlink grant, and a second downlink channel or signal scheduled by the first downlink grant carries the synchronization assistance information.

9. The method according to claim 8, wherein the first downlink channel or signal comprises a first physical downlink control channel (PDCCH), wherein the first PDCCH is scrambled with a system information-radio network temporary identifier (SI-RNTI).

10. The method according to claim 8 or 9, wherein the first downlink grant is configured to determine at least one of: allocation information of a time-domain resource occupied by the second downlink channel or signal, allocation information of a frequency-domain resource occupied by the second downlink channel or signal, a modulation and coding scheme (MCS) of a transport block (TB) in the second downlink channel or signal, a redundancy version (RV) of an RB in the second downlink channel or signal, whether the second downlink channel or signal comprises an indication of a master information block (MIB), whether the second downlink channel or signal comprises an indication of information carried in a physical broadcast channel (PBCH), whether the second downlink channel or signal comprises an indication of a system information block (SIB)1, whether the second downlink channel or signal comprises an indication of a SIB19, whether the second downlink channel or signal comprises an indication of the synchronization assistance information, quasi-co-location (QCL) information associated with the second downlink channel or signal, or an antenna polarization mode of a satellite.

11. The method according to any one of claims 1 to 6, wherein the first downlink channel or signal being configured to determine the synchronization assistance information comprises a case where the first downlink channel or signal carries configuration information of a first search space set, the first search space set is configured to transmit a second downlink grant, and a third downlink channel or signal scheduled by the second downlink grant carries the synchronization assistance information.

12. The method according to claim 11, wherein the first search space set being configured to transmit the second downlink grant comprises a case where the first search space set is configured to transmit a second physical downlink control channel (PDCCH), wherein the second PDCCH carries the second downlink grant.

13. The method according to claim 11 or 12, wherein the first search space set is a type 0-physical downlink control channel (PDCCH) common search space (CSS) set, and the first downlink channel or signal comprises a physical broadcast channel (PBCH), wherein the PBCH carries configuration information of the type 0-PDCCH CSS set.

14. The method according to any one of claims 11 to 13, wherein the second downlink grant is configured to determine at least one of: allocation information of a time-domain resource occupied by the third downlink channel or signal, allocation information of a frequency-domain resource occupied by the third downlink channel or signal, a modulation and coding scheme (MCS) of a transport block (TB) in the third downlink channel or signal, a redundancy version (RV) of an RB in the third downlink channel or signal, whether the third downlink channel or signal comprises an indication of a master information block (MIB), whether the third downlink channel or signal comprises an indication of information carried in a physical broadcast channel (PBCH), whether the third downlink channel or signal comprises an indication of a system information block (SIB) 1, whether the third downlink channel or signal comprises an indication of a SIB19, whether the third downlink channel or signal comprises an indication of the synchronization assistance information, quasi-co-location (QCL) information associated with the third downlink channel or signal, or an antenna polarization mode of a satellite.

15. The method according to any one of claims 1 to 6, wherein the first downlink channel or signal being configured to determine the synchronization assistance information comprises a case where the first downlink channel or signal carries configuration information of a first control resource set, the first control resource set is configured to transmit a third downlink grant, and a fourth downlink channel or signal scheduled by the third downlink grant carries the synchronization assistance information.

16. The method according to claim 15, wherein the first control resource set being configured to transmit the third downlink grant comprises a case where the first control resource set is configured to transmit a third physical downlink control channel (PDCCH), wherein the third PDCCH carries the third downlink grant.

17. The method according to claim 15 or 16, wherein the first control resource set is a type 0-physical downlink control channel (PDCCH) common search space (CSS) set, and the first downlink channel or signal comprises a physical broadcast channel (PBCH), wherein the PBCH carries configuration information of the first control resource set.

18. The method according to any one of claims 15 to 17, wherein the third downlink grant is configured to determine at least one of: allocation information of a time-domain resource occupied by the fourth downlink channel or signal, allocation information of a frequency-domain resource occupied by the fourth downlink channel or signal, a modulation and coding scheme (MCS) of a transport block (TB) in the fourth downlink channel or signal, a redundancy version (RV) of an RB in the fourth downlink channel or signal, whether the fourth downlink channel or signal comprises an indication of a master information block (MIB), whether the fourth downlink channel or signal comprises an indication of information carried in a physical broadcast channel (PBCH), whether the fourth downlink channel or signal comprises an indication of a system information block (SIB)1, whether the fourth downlink channel or signal comprises an indication of a SIB19, whether the fourth downlink channel or signal comprises an indication of the synchronization assistance information, quasi-co-location (QCL) information associated with the fourth downlink channel or signal, or an antenna polarization mode of a satellite.

19. The method according to any one of claims 1 to 18, wherein the first uplink resource is determined based on at least one of the first downlink resource or the first downlink channel or signal.

20. The method according to claim 19, wherein the first uplink resource being determined based on at least one of the first downlink resource or the first downlink channel or signal comprises at least one of the following items:
a time-domain position of the first uplink resource is determined based on a time-domain position of the first downlink resource;
a time-domain position of the first uplink resource is determined based on a time-domain position of a first downlink reference signal within the first downlink channel or signal;
a frequency-domain position of the first uplink resource is determined based on a frequency-domain position of the first downlink resource;
a reference signal sequence associated with the first uplink resource is determined based on a first downlink reference signal within the first downlink channel or signal;
quasi-co-location (QCL) information associated with the first uplink resource is determined based on QCL information associated with the first downlink resource;
the first downlink channel or signal carries indication information of a time-domain position of the first uplink resource;
the first downlink channel or signal carries indication information of a frequency-domain position of the first uplink resource;
the first downlink channel or signal carries indication information of a reference signal sequence associated with the first uplink resource; or
the first downlink channel or signal carries indication information of QCL information associated with the first uplink resource.

21. The method according to claim 19, wherein the first uplink resource being determined based on at least one of the first downlink resource or the first downlink channel or signal comprises a case where the first uplink resource is determined based on a mapping between the first uplink resource and the first downlink resource, wherein the mapping between the first uplink resource and the first downlink resource is predefined or preconfigured, or is indicated by the first downlink channel or signal.

22. The method according to claim 21, wherein first uplink resources are in one-to-one mapping to first downlink resources, or a plurality of first uplink resources are mapped to one first downlink resource.

23. The method according to any one of claims 19 to 22, wherein the first uplink resource being determined based on at least one of the first downlink resource or the first downlink channel or signal comprises a case where at least one of a time-domain position of the first uplink resource, a frequency-domain position of the first uplink resource, a reference signal sequence associated with the first uplink resource, or quasi-co-location (QCL) information associated with the first uplink resource is determined based on at least one of the first downlink resource or the first downlink channel or signal.

24. The method according to any one of claims 1 to 23, wherein the synchronization assistance information is configured to indicate at least one of ephemeris information, a common timing advance (TA) parameter, reference epoch time indication information, or a duration of a target timer.

25. The method according to claim 24, wherein the synchronization assistance information comprises the reference epoch time indication information, wherein the reference epoch time indication information is configured to determine a reference epoch time associated with the synchronization assistance information.

26. The method according to claim 24 or 25, wherein the synchronization assistance information does not comprise the reference epoch time indication information, wherein a reference epoch time associated with the synchronization assistance information is determined based on at least one of a time-domain position of the first downlink resource, a time-domain position of a first downlink reference signal within the first downlink channel or signal, a time-domain position of a resource occupied by a downlink channel or signal carrying the synchronization assistance information, a time-domain position of a resource occupied by a downlink grant scheduling a downlink channel or signal carrying the synchronization assistance information, a time-domain position of a search space set associated with a downlink grant scheduling a downlink channel or signal carrying the synchronization assistance information, a time-domain position of a control resource set associated with a downlink grant scheduling a downlink channel or signal carrying the synchronization assistance information, or a time-domain position of the first uplink resource.

27. The method according to any one of claims 24 to 26, wherein the ephemeris information comprises at least one of ephemeris information of one or more serving cell satellites, or ephemeris information of one or more neighboring cell satellites.

28. The method according to any one of claims 24 to 27, wherein the common TA parameter comprises at least one of a common TA parameter associated with one or more serving cell satellites, or a common TA parameter associated with one or more neighboring cell satellites.

29. The method according to any one of claims 24 to 28, wherein the target timer comprises at least one of a target timer associated with one or more serving cell satellites, or a target timer associated with one or more neighboring cell satellites.

30. The method according to any one of claims 1 to 29, wherein transmitting the first uplink channel or signal to the network device over the first uplink resource based on the synchronization assistance information comprises:
transmitting the first uplink channel or signal to the network device over the first uplink resource based on the synchronization assistance information upon uplink time-domain and/or frequency-domain synchronization.

31. The method according to any one of claims 1 to 30, wherein a time-domain resource occupied by the first downlink channel or signal is predefined, and/or a frequency-domain resource occupied by the first downlink channel or signal is predefined.

32. The method according to any one of claims 1 to 31, wherein the first downlink resource is a periodically configured downlink resource, and the first downlink channel or signal is periodically transmitted; and in a case where a plurality of first downlink resources are contained in a period, each of the plurality of first downlink resources is associated with an index, or the first downlink channel or signal transmitted over each of the plurality of first downlink resources is associated with an index.

33. The method according to claim 32, wherein first downlink channels or signals that are transmitted over each of the plurality of first downlink resources and are associated with a same index have a quasi-co-location (QCL) relationship, and/or first downlink channels or signals that are transmitted over each of the plurality of first downlink resources and are associated with different indexes do not have a QCL relationship.

34. The method according to claim 32, wherein first downlink channels or signals associated with a same index have a quasi-co-location (QCL) relationship, and/or first downlink channels or signals associated with different indexes do not have a QCL relationship.

35. A method for wireless communication, performed by a network device, the method comprising:
transmitting a first downlink channel or signal to a terminal device over a first downlink resource, wherein the first downlink channel or signal is configured to determine synchronization assistance information; and
detecting a first uplink channel or signal transmitted by the terminal device over a first uplink resource based on the synchronization assistance information.

36. The method according to claim 35, wherein the first downlink channel or signal comprises a first downlink reference signal, wherein the first downlink reference signal is configured for the terminal device to achieve downlink synchronization, and/or to demodulate other channels or signals within the first downlink channel or signal than the first downlink reference signal.

37. The method according to claim 36, wherein the first downlink reference signal comprises one or more downlink synchronized signals.

38. The method according to any one of claims 35 to 37, wherein the first uplink channel or signal is configured to request at least one of: transmission of a master information block (MIB), transmission of information carried in a physical broadcast channel (PBCH), transmission of a system information block (SIB)1, transmission of a system message, transmission of a SIB19, rescue, or transmission of a high-priority traffic.

39. The method according to any one of claims 35 to 38, wherein the first downlink channel or signal carries at least one of a master information block (MIB) or information carried in a physical broadcast channel (PBCH).

40. The method according to claim 39, wherein the first uplink channel or signal is not configured to request transmission of the MIB.

41. The method according to any one of claims 35 to 40, wherein the first downlink channel or signal being configured to determine the synchronization assistance information comprises a case where the first downlink channel or signal carries the synchronization assistance information.

42. The method according to any one of claims 35 to 40, wherein the first downlink channel or signal being configured to determine the synchronization assistance information comprises a case where the first downlink channel or signal carries a first downlink grant, and a second downlink channel or signal scheduled by the first downlink grant carries the synchronization assistance information.

43. The method according to claim 42, wherein the first downlink channel or signal comprises a first physical downlink control channel (PDCCH), wherein the first PDCCH is scrambled with a system information-radio network temporary identifier (SI-RNTI).

44. The method according to claim 42 or 43, wherein the first downlink grant is configured to determine at least one of: allocation information of a time-domain resource occupied by the second downlink channel or signal, allocation information of a frequency-domain resource occupied by the second downlink channel or signal, a modulation and coding scheme (MCS) of a transport block (TB) in the second downlink channel or signal, a redundancy version (RV) of an RB in the second downlink channel or signal, whether the second downlink channel or signal comprises an indication of a master information block (MIB), whether the second downlink channel or signal comprises an indication of information carried in a physical broadcast channel (PBCH), whether the second downlink channel or signal comprises an indication of a system information block (SIB)1, whether the second downlink channel or signal comprises an indication of a SIB19, whether the second downlink channel or signal comprises an indication of the synchronization assistance information, quasi-co-location (QCL) information associated with the second downlink channel or signal, or an antenna polarization mode of a satellite.

45. The method according to any one of claims 35 to 40, wherein the first downlink channel or signal being configured to determine the synchronization assistance information comprises a case where the first downlink channel or signal carries configuration information of a first search space set, the first search space set is configured to transmit a second downlink grant, and a third downlink channel or signal scheduled by the second downlink grant carries the synchronization assistance information.

46. The method according to claim 45, wherein the first search space set being configured to transmit the second downlink grant comprises a case where the first search space set is configured to transmit a second physical downlink control channel (PDCCH), wherein the second PDCCH carries the second downlink grant.

47. The method according to claim 45 or 46, wherein the first search space set is a type 0-physical downlink control channel (PDCCH) common search space (CSS) set, and the first downlink channel or signal comprises a physical broadcast channel (PBCH), wherein the PBCH carries configuration information of the type 0-PDCCH CSS set.

48. The method according to any one of claims 45 to 47, wherein the second downlink grant is configured to determine at least one of: allocation information of a time-domain resource occupied by the third downlink channel or signal, allocation information of a frequency-domain resource occupied by the third downlink channel or signal, a modulation and coding scheme (MCS) of a transport block (TB) in the third downlink channel or signal, a redundancy version (RV) of an RB in the third downlink channel or signal, whether the third downlink channel or signal comprises an indication of a master information block (MIB), whether the third downlink channel or signal comprises an indication of information carried in a physical broadcast channel (PBCH), whether the third downlink channel or signal comprises an indication of a system information block (SIB)1, whether the third downlink channel or signal comprises an indication of a SIB 19, whether the third downlink channel or signal comprises an indication of the synchronization assistance information, quasi-co-location (QCL) information associated with the third downlink channel or signal, or an antenna polarization mode of a satellite.

49. The method according to any one of claims 35 to 40, wherein the first downlink channel or signal being configured to determine the synchronization assistance information comprises a case where the first downlink channel or signal carries configuration information of a first control resource set, the first control resource set is configured to transmit a third downlink grant, and a fourth downlink channel or signal scheduled by the third downlink grant carries the synchronization assistance information.

50. The method according to claim 49, wherein the first control resource set being configured to transmit the third downlink grant comprises a case where the first control resource set is configured to transmit a third physical downlink control channel (PDCCH), wherein the third PDCCH carries the third downlink grant.

51. The method according to claim 49 or 50, wherein the first control resource set is a type 0-physical downlink control channel (PDCCH) common search space (CSS) set, and the first downlink channel or signal comprises a physical broadcast channel (PBCH), wherein the PBCH carries configuration information of the first control resource set.

52. The method according to any one of claims 49 to 51, wherein the third downlink grant is configured to determine at least one of: allocation information of a time-domain resource occupied by the fourth downlink channel or signal, allocation information of a frequency-domain resource occupied by the fourth downlink channel or signal, a modulation and coding scheme (MCS) of a transport block (TB) in the fourth downlink channel or signal, a redundancy version (RV) of an RB in the fourth downlink channel or signal, whether the fourth downlink channel or signal comprises an indication of a master information block (MIB), whether the fourth downlink channel or signal comprises an indication of information carried in a physical broadcast channel (PBCH), whether the fourth downlink channel or signal comprises an indication of a system information block (SIB)1, whether the fourth downlink channel or signal comprises an indication of a SIB19, whether the fourth downlink channel or signal comprises an indication of the synchronization assistance information, quasi-co-location (QCL) information associated with the fourth downlink channel or signal, or an antenna polarization mode of a satellite.

53. The method according to any one of claims 35 to 42, wherein the first uplink resource is determined based on at least one of the first downlink resource or the first downlink channel or signal.

54. The method according to claim 53, wherein the first uplink resource being determined based on at least one of the first downlink resource or the first downlink channel or signal comprises at least one of the following items:
a time-domain position of the first uplink resource is determined based on a time-domain position of the first downlink resource;
a time-domain position of the first uplink resource is determined based on a time-domain position of a first downlink reference signal within the first downlink channel or signal;
a frequency-domain position of the first uplink resource is determined based on a frequency-domain position of the first downlink resource;
a reference signal sequence associated with the first uplink resource is determined based on a first downlink reference signal within the first downlink channel or signal;
quasi-co-location (QCL) information associated with the first uplink resource is determined based on QCL information associated with the first downlink resource;
the first downlink channel or signal carries indication information of a time-domain position of the first uplink resource;
the first downlink channel or signal carries indication information of a frequency-domain position of the first uplink resource;
the first downlink channel or signal carries indication information of a reference signal sequence associated with the first uplink resource; or
the first downlink channel or signal carries indication information of QCL information associated with the first uplink resource.

55. The method according to claim 53, wherein the first uplink resource being determined based on at least one of the first downlink resource or the first downlink channel or signal comprises a case where the first uplink resource is determined based on a mapping between the first uplink resource and the first downlink resource, wherein the mapping between the first uplink resource and the first downlink resource is predefined or preconfigured, or is indicated by the first downlink channel or signal.

56. The method according to claim 55, wherein first uplink resources are in one-to-one mapping to first downlink resources, or a plurality of first uplink resources are mapped to one first downlink resource.

57. The method according to any one of claims 53 to 56, wherein the first uplink resource being determined based on at least one of the first downlink resource or the first downlink channel or signal comprises a case where at least one of a time-domain position of the first uplink resource, a frequency-domain position of the first uplink resource, a reference signal sequence associated with the first uplink resource, or quasi-co-location (QCL) information associated with the first uplink resource is determined based on at least one of the first downlink resource or the first downlink channel or signal.

58. The method according to any one of claims 35 to 57, wherein the synchronization assistance information is configured to indicate at least one of ephemeris information, a common timing advance (TA) parameter, reference epoch time indication information, or a duration of a target timer.

59. The method according to claim 58, wherein the synchronization assistance information comprises the reference epoch time indication information, wherein the reference epoch time indication information is used to determine a reference epoch time associated with the synchronization assistance information.

60. The method according to claim 58 or 59, wherein the synchronization assistance information does not comprise the reference epoch time indication information, wherein a reference epoch time associated with the synchronization assistance information is determined based on at least one of a time-domain position of the first downlink resource, a time-domain position of a first downlink reference signal within the first downlink channel or signal, a time-domain position of a resource occupied by a downlink channel or signal carrying the synchronization assistance information, a time-domain position of a resource occupied by a downlink grant scheduling a downlink channel or signal carrying the synchronization assistance information, a time-domain position of a search space set associated with a downlink grant scheduling a downlink channel or signal carrying the synchronization assistance information, a time-domain position of a control resource set associated with a downlink grant scheduling a downlink channel or signal carrying the synchronization assistance information, or a time-domain position of the first uplink resource.

61. The method according to any one of claims 58 to 60, wherein the ephemeris information comprises at least one of ephemeris information of one or more serving cell satellites, or ephemeris information of one or more neighboring cell satellites.

62. The method according to any one of claims 58 to 61, wherein the common TA parameter comprises at least one of a common TA parameter associated with one or more serving cell satellites, or a common TA parameter associated with one or more neighboring cell satellites.

63. The method according to any one of claims 58 to 62, wherein the target timer comprises at least one of a target timer associated with one or more serving cell satellites, or a target timer associated with one or more neighboring cell satellites.

64. The method according to any one of claims 35 to 63, wherein the first uplink channel or signal is transmitted by the terminal device based on the synchronization assistance information upon uplink time-domain and/or frequency-domain synchronization.

65. The method according to any one of claims 35 to 64, wherein a time-domain resource occupied by the first downlink channel or signal is predefined, and/or a frequency-domain resource occupied by the first downlink channel or signal is predefined.

66. The method according to any one of claims 35 to 65, wherein the first downlink resource is a periodically configured downlink resource, and the first downlink channel or signal is periodically transmitted; and in a case where a plurality of first downlink resources are contained in a period, each of the plurality of first downlink resources is associated with an index, or the first downlink channel or signal transmitted over each of the plurality of first downlink resources is associated with an index.

67. The method according to claim 66, wherein first downlink channels or signals that are transmitted over each of the plurality of first downlink resources and are associated with a same index have a quasi-co-location (QCL) relationship, and/or first downlink channels or signals that are transmitted over each of the plurality of first downlink resources and are associated with different indexes do not have a QCL relationship.

68. The method according to claim 66, wherein first downlink channels or signals associated with a same index have a quasi-co-location (QCL) relationship, and/or first downlink channels or signals associated with different indexes do not have a QCL relationship.

69. An apparatus for wireless communication, comprising:
a receiving module, configured to receive a first downlink channel or signal from a network device over a first downlink resource, wherein the first downlink channel or signal is configured to determine synchronization assistance information; and
a transmitting module, configured to transmit a first uplink channel or signal to the network device over a first uplink resource based on the synchronization assistance information.

70. An apparatus for wireless communication, comprising:
a transmitting module, configured to transmit a first downlink channel or signal to a terminal device over a first downlink resource, wherein the first downlink channel or signal is configured to determine synchronization assistance information; and
a receiving module, configured to detect a first uplink channel or signal transmitted by the terminal device over a first uplink resource based on the synchronization assistance information.

71. A communication device, comprising: a processor and a memory, wherein the memory is configured to store one or more computer programs, wherein the processor is configured to load and run the one or more computer programs to cause the communication device to perform the method as defined in any one of claims 1 to 34, or the method as defined in any one of claims 35 to 68.

72. A computer-readable storage medium, storing one or more computer programs, wherein the one or more computer programs, when loaded and run by a processor, cause the processor to perform the method as defined in any one of claims 1 to 34, or the method as defined in any one of claims 35 to 68.

73. A chip, comprising: programmable logic circuitry and/or one or more program instructions, wherein the chip, when running, is caused to perform the method as defined in any one of claims 1 to 34, or the method as defined in any one of claims 35 to 68.

74. A computer program product, comprising: one or more computer instructions stored in a computer-readable storage medium, and the one or more computer instructions, when read from the computer-readable storage medium and executed by a processor, cause the processor to perform the method as defined in any one of claims 1 to 34, or the method as defined in any one of claims 35 to 68.
